# EUROPÄISCHE PATENTSCHRIFT

(11) **EP 3 795 979 B1**
(45) Veröffentlichungstag und Bekanntmachung des Hinweises auf die Patenterteilung: **18.06.2025**
(21) Anmeldenummer: 20190555.1
(22) Anmeldetag: 11.08.2020
(51) Int. Cl.: G01N 15/02

(54) **MESSZELLE FÜR EIN PARTIKELGRÖSSENMESSGERÄT**
MEASURING CELL FOR A PARTICLE SIZE MEASURING DEVICE
CELLULE DE MESURE POUR UN APPAREIL DE MESURE GRANULOMÉTRIQUE

(30) Priorität: 28.08.2019 DE 102019123059
(43) Veröffentlichungstag der Anmeldung: 24.03.2021
(73) Patentinhaber: Fritsch GmbH, 55743 Idar-Oberstein (DE)
(72) Erfinder: CROLLY, Günther Dr., 67657 Kaiserslauten (DE); HUWER, Egbert, 55758 Oberreidenbach (DE); SCHARDT, Karina, 55743 Idar-Oberstein (DE); MUTTER, Wolfgang, 66892 Bruchmühlbach (DE)
(74) Vertreter: Blumbach · Zinngrebe Patentanwälte PartG mbB

(56) Entgegenhaltungen:
- WO-A1-2013/179948
- FR-A1- 2 371 245
- US-A1- 2015 346 081

## Beschreibung

### Gebiet der Erfindung

Die Erfindung betrifft eine Messzelle für ein Partikelgrößenmessgerät im Allgemeinen und eine Nass-Messzelle für ein Laser-Partikelgrößenmessgerät im Besonderen.

### Hintergrund der Erfindung

Ein Partikelgrößenmessgerät, welches auf dem Prinzip der Lichtbeugung arbeitet, verwendet ein Lichtstrahlenbündel, zumeist von einem Laser geliefert, welches die zu untersuchende Probe durchstrahlt. Strahlabwärts der Probe wird die durch Streuung an dem Partikelensemble erzeugte Winkel-Intensitätsverteilung mit einem Detektorsystem aufgenommen. Anhand des so erzeugten Streu-/Beugungsmuster kann die Partikelgrößenverteilung der Partikel in der Probe bestimmt werden. Mathematisch kann die Partikelgrößenverteilung mit der Mie-Theorie beschrieben werden. Die Mie-Theorie behandelt sowohl Streuung unter Vorwärts- als auch unter Rückwärtswinkeln. Ein wichtiger Teil der Mie-Theorie beschreibt die sogenannte Fraunhoferbeugung, welche die Lichtbeugung unter Vorwärtswinkeln betrifft. Grundsätzlich gilt, je kleiner die Partikel sind, desto größer sind die Streuwinkel und umgekehrt. Je nach Aufbau können Partikelgrößen bis zu 1000 µm oder sogar noch größer gemessen werden.

Bekannte Partikelgrößenmessgeräte umfassen eine Lichtquelle, typischerweise einen Laser und eine sogenannte Strahlverarbeitungseinheit, welche den dünnen parallelen Laserstrahl zu einem Parallelstrahl mit größerem Durchmesser aufweitet. Bei frühen Partikelgrößenmessgeräten wurde die zu untersuchende Probe in einer Messzelle in diesem aufgeweiteten Parallelstrahl untersucht und das von den Teilchen erzeugte Beugungsspektrum mit einer Fourier-Linse, welche strahlabwärts der Probe angeordnet ist, auf einen Detektor fokussiert. Diese Technik wird gemäß ISO 13320-1:1999(E) als "konventionelle Technik" bezeichnet. In der EP 0 207 176 derselben Anmelderin ist ein Partikelgrößenmessgerät beschrieben, welches die optischen Verhältnisse gegenüber der konventionellen Technik umkehrt. Dieser Aufbau wird gemäß ISO 13320-1: 1999(E) als "Reverse Fourier Set-Up" (Inverse Fourier-Optik) bezeichnet. Bei der inversen Fourier-Optik befindet sich die Fourier-Linse strahlaufwärts der Messzelle, so dass die Probe im konvergenten Lichtstrahlenbündel beleuchtet wird.

Die Messzelle besitzt typischerweise ein Eintrittsfenster durch welches das Lichtstrahlenbündel in die Messzelle eintritt und ein Austrittsfenster, durch welches das gestreute Licht wieder austritt, um von dem Detektorsystem nachgewiesen zu werden. Bei manchen Partikelgrößenmessgeräten kann auch Streulicht unter Rückwärtswinkeln gemessen werden, welches durch das Eintrittsfenster wieder aus der Messzelle austritt. Die Proben liegen typischerweise als Dispersion vor, wobei je nach Messzelle und Dispersionskreislauf, entweder trocken- oder nassdispergierte Proben untersucht werden können.

Für viele Proben bietet die Nass-Dispergierung eine gute Form des Dispergierens. Dazu wird das Probenmaterial in einen geschlossenen Flüssigkeitskreislauf oder genauer Dispersionskreislauf, in welchem sich die Messzelle befindet, gegeben und fortlaufend durch den Dispersionskreislauf zirkuliert. Hierzu weisen Laserpartikelgrößenmessgeräte ggf. eine Aufnahme für eine Nass-Messzelle auf und die Nassdispergiervorrichtung wird als Modul an das Laserpartikelgrößenmessgerät angedockt und an einen Dispersionseinlass und einen Dispersionsauslass an die Messzelle angeschlossen, wobei die Messzelle in dem Partikelgrößenmessgerät im Durchfluss betrieben wird.

Nach jeder Messung werden die Nassdispergiervorrichtung und der Dispersionskreislauf mit der Messzelle und ggf. mit weiteren Bauelementen in dem Dispersionskreislauf gereinigt, d.h. entleert und mit frischer partikelfreier Flüssigkeit gespült. Trotzdem ist es manchmal erforderlich, die Messzelle zu öffnen um sie gründlich zu reinigen oder um festsitzende ggf. zu große Partikel zu entfernen. Andererseits müssen das Eintrittsfenster und das Austrittsfenster gut gedichtet sein. Es existieren Nass-Messzellen, bei welchen das Eintritts- und Austrittsfenster in Dichtungen mit komplizierten Dichtungsgeometrien ggf. mit Bereichen mit dünnerer Wandstärke oder Taschen in den Dichtungen eingesetzt werden. Derartige Dichtungen sind aufwändig und teuer in der Herstellung, benötigen dafür ggf. spezielle Herstellungsformen, können aufgrund geringer Wandstärken an Verbindungsbrücken empfindlich sein und sind ggf. umständlich herauszunehmen und fummelig wiedereinzusetzen.

Die Druckschriften US 2015/346081 A1, WO2013/179948 A1 und FR2371245A1 offenbaren solche aus dem Stand der Technik bekannten Messszellen.

### Allgemeine Beschreibung der Erfindung

Es ist daher eine Aufgabe der Erfindung, eine Messzelle für ein Partikelgrößenmessgerät bereit zu stellen, welche einerseits für den Benutzer einfach und bequem zu öffnen, zu reinigen und wieder zu schließen ist und welche andererseits gut gedichtet ist.

Ein weiterer Aspekt der Aufgabe ist es, eine Messzelle für ein Partikelgrößenmessgerät bereit zu stellen, welche kostengünstig herstellbar ist und insbesondere einfach geformte, stabile Dichtungen aufweist.

Ein weiterer Aspekt der Aufgabe ist es, eine Messzelle für ein Partikelgrößenmessgerät bereit zu stellen, bei welcher die Fenster und die Dichtungen einfach entnommen und auch einfach wiedereingesetzt werden können.

Die Aufgabe der Erfindung wird von dem Gegenstand der unabhängigen Ansprüche gelöst. Bevorzugte Ausführungsformen sind Gegenstand der abhängigen Ansprüche.

Gemäß einem Aspekt der Erfindung wird eine Messzelle für ein Partikelgrößenmessgerät, insbesondere ein Laser-Partikelgrößenmessgerät bereitgestellt. Die Messzelle definiert ein Probenvolumen, durch welches eine Dispersion im Durchflussbetrieb durchleitbar ist, um mittels Lichtstreuung bzw Lichtbeugung ein sogenanntes Beugungsmuster der in der Dispersion enthaltenen dispersen Phase zu erzeugen und in dem Partikelgrößenmessgerät aufzunehmen.

Die Messzelle weist hierzu Folgendes auf:
- Eine Zuleitung, insbesondere umfassend einen Zuleitungskanal, um die Dispersion aus einer Dispergiervorrichtung in das Probenvolumen einzuleiten und eine Ableitung, insbesondere umfassend einen Ableitungskanal, um die Dispersion aus dem Probenvolumen wieder zurück in die Dispersionsvorrichtung abzuleiten, um den Dispersionskreislauf durch die Messzelle zu bilden.
- Eine erste Messzellenbaugruppe i) mit einem Messzellengrundkörper, insbesondere aus Metall, z.B. aus Edelstahl, unter anderem zum Befestigen der Messzelle an einer Haltevorrichtung, wobei der Messzellengrundkörper eine innere Flachseite aufweist, ii) mit einer ersten Fensterscheibe, vorzugsweise aus Glas, welche an dem Messzellengrundkörper angeordnet ist, und iii) einem ersten Dichtungselement in Form eines ersten Dichtungsrings aus elastomerem Material, um die erste Fensterscheibe an dem Messzellengrundkörper fluiddicht abzudichten,
- Eine zweite Messzellenbaugruppe i) mit einer Verschlussplatte zum Befestigen an dem Messzellengrundkörper, insbesondere aus Metall, z.B. aus Edelstahl, wobei die Verschlussplatte eine innere Flachseite aufweist, welche in dem am Messzellengrundkörper montierten Zustand der inneren Flachseite des Messzellengrundkörpers zugewandt ist, ii) mit einer zweiten Fensterscheibe, vorzugsweise aus Glas, welche an der Verschlussplatte angeordnet ist, und iii) einem zweiten Dichtungselement in Form eines zweiten Dichtungsrings aus elastomerem Material, um die zweite Fensterscheibe an der Verschlussplatte fluiddicht abzudichten.
- Ein scheibenförmiges drittes Dichtungselement aus elastomerem Material, d.h. ein drittes Dichtungselement in Form einer Dichtungsscheibe aus elastomerem Material. Als elastomeres Material kann z.B. ein synthetischer Kautschuk, insbesondere ein Fluorelastomer oder Fluorkautschuk (FKM), z.B. Viton^{®}, oder ein Perfluorkautschuk (FFKM), z.B. Kalrez^{®}, verwendet werden. Fluorelastomere haben den Vorteil hoher chemischer Beständigkeit. Das dritte scheibenförmige Dichtungselement liegt, insbesondere sandwichartig, zwischen der ersten Messzellenbaugruppe und der zweiten Messzellenbaugruppe, um die erste und zweite Messzellenbaugruppe gegeneinander abzudichten und dabei das Probenvolumen zu definieren.

Der Satz aus Dichtungselementen ist also insbesondere zumindest dreiteilig, die drei Teile bestehend aus dem ersten und zweiten Dichtungselement, welches aus dem ersten bzw. zweiten Dichtungsring besteht und dem dazwischenliegenden scheibenförmigen dritten Dichtungselement bestehend aus der Dichtungsscheibe. Mit anderen Worten sind der erste und zweite Dichtungsring und das scheibenförmiges dritte Dichtungselement in Form einer Dichtungsscheibe als separate Dichtungselemente ausgebildet.

Dadurch kann die Formgebung des ersten, zweiten und dritten Dichtungselements einfach sein, wodurch Dichtungselemente kostengünstig in der Herstellung sind und eine stabile Formgebung aufweisen können.

Insbesondere lassen sich die Dichtungselemente ohne komplexe und dünnwandige Übergangsbrücken oder andere dünnwandige Bestandteile herstellen, so dass sie einfach auszubauen und wiedereinzusetzen sind und ferner stabil und langlebig sind.

In besonders einfacher Weise können die Dichtungselemente aus einem Plattenmaterial hergestellt werden und brauchen z.B. nicht in einer speziellen Pressform individuell geformt und gefertigt, z.B. heißgeformt zu werden.

Vorzugsweise sind die erste und zweite Fensterscheibe im dem ersten bzw. zweiten Dichtungsring zumindest derart an dem Messzellengrundkörper bzw. der Verschlussplatte festgehalten, dass die erste und zweite Messzellenbaugruppe vom Benutzer als erste und zweite Baueinheit gehandhabt werden können. Daher können die erste und zweite Messzellenbaugruppe auch als erste bzw. zweite Messzellenhälfte bezeichnet werden, wobei "Hälfte" nicht im mathematischen Sinne zu verstehen ist. Die Messzellenebene wird durch den Spalt zwischen der ersten und zweiten Fensterscheibe definiert, und verläuft vorzugsweise durch das scheibenförmige dritte Dichtungselement.

Die Zuleitung und/oder die Ableitung sind vorzugsweise als Zuleitungskanal bzw. Ableitungskanal in dem Messzellengrundkörper oder der Verschlussplatte ausgebildet, wobei die Kanäle bevorzugt als Bohrungen in dem Messzellengrundkörper oder in der Verschlussplatte verlaufen.

Das scheibenförmige dritte Dichtungselement definiert vorzugsweise einen inneren Strömungskanal und bildet daher eine Strömungsscheibe. Das scheibenförmige dritte Dichtungselement weist insbesondere eine erste und zweite Flachseite auf und erstreckt sich flächig bzw. sandwichartig zwischen der ersten und zweiten inneren Dichtfläche der ersten und zweiten Messzellenbaugruppe, insbesondere wobei die erste und zweite innere Dichtfläche jeweils gegen eine der beiden gegenüberliegenden Flachseiten der Dichtungsscheibe bzw. Strömungsscheibe dichtet, um die erste und zweite Messzellenbaugruppe gegeneinander fluiddicht abzudichten. Der Strömungskanal, erstreckt sich im montierten Zustand insbesondere zwischen der Zuleitung und der Ableitung in der Messzellenebene und bildet im Bereich zwischen der ersten und zweiten Fensterscheibe einen von außen sichtbaren Teil des Probenvolumens. Mit anderen Worten definiert das dritte Dichtungselement insbesondere eine scheibenförmige flächige Strömungsscheibe.

Mit anderen Worten wird das Probenvolumen auf den beiden Flachseiten parallel zur Messzellenebene von der ersten und zweiten Messzellenbaugruppe und schmalseitig von einer umlaufenden inneren, sich quer zur Messebene zwischen der ersten und zweiten Messzellenbaugruppe erstreckenden Schmalseite des Strömungskanals in dem scheibenförmigen dritten Dichtungselement begrenzt.

Vorzugsweise weisen also der Messzellengrundkörper eine erste innere Dichtfläche und die Verschlussplatte eine zweite innere Dichtfläche auf, wobei diese erste und zweite innere Dichtfläche einander zugewandt sind und wobei das scheibenförmige dritte Dichtungselement zwischen der ersten und zweiten inneren Dichtfläche eingesetzt ist und gegen die erste und zweite innere Dichtfläche dichtet. Der Zuleitungskanal und der Ableitungskanal münden in einen Bereich zwischen der ersten und zweiten inneren Dichtfläche an einem ersten bzw. zweiten Ende des Strömungskanals und zwar der Zuleitungskanal auf einer Seite des Probenvolumens, entweder oben oder unten, und der Ableitungskanal auf der gegenüberliegenden Seite des Probenvolumens, also unten bzw. oben. Der Strömungskanal verläuft indes von der Mündung des Zuleitungskanals über den zwischen der ersten und zweiten Fensterscheibe von außen sichtbaren Teil des Probenvolumens zu der Mündung des Ableitungskanals.

Auch dies trägt zu einer einfachen Formgebung und Herstellung der Dichtungselemente bei.

Vorzugsweise springen aus der ersten und/oder zweiten inneren Dichtfläche des Messzellengrundkörpers bzw. der Verschlussplatte Positionierungsstifte vor, welche in korrespondierende Öffnungen in dem scheibenförmigen dritten Dichtungselement eingreifen, wenn dieses an der ersten bzw. zweiten inneren Dichtfläche anliegt, wodurch in vorteilhafter Weise eine exakte Positionierung des scheibenförmigen dritten Dichtungselements beim Schließen der Messzelle gewährleistet und ein unerwünschtes Verrutschen verhindert werden.

Der Strömungskanal ist vorzugsweise länglich ausgebildet und wird beidseits von einer inneren Schmalseite begrenzt, so dass im montierten Zustand das Probenvolumen parallel zur Messzellenebene von der ersten und zweiten inneren Dichtfläche des Messzellengrundkörpers bzw. der Verschlussplatte, der ersten und zweiten Fensterscheibe und dem ersten und zweiten Dichtungsring, und in der Richtung senkrecht zur Messzellenebene von der inneren Schmalseite des Strömungskanals begrenzt wird.

Da die erste und zweite Fensterscheibe im montierten Zustand vorzugsweise parallel zueinander verlaufen, erstreckt sich der Raumbereich zwischen der ersten und zweiten Fensterscheibe zweidimensional scheibenförmig parallel zur Messzellenebene und der Strömungskanal durch den scheibenförmigen Raumbereich verläuft zwischen der ersten und zweiten Fensterscheibe durch diesen Raumbereich hindurch. Da der Strömungskanal vorzugsweise länglich und schmal geformt ist, wird ein Teil, insbesondere der überwiegende Teil des scheibenförmigen Raumbereichs zwischen der ersten und zweiten Fensterscheibe von dem scheibenförmigen dritten Dichtungselement ausgefüllt.

Die erste und zweite Fensterscheibe ist vorzugsweise in den ersten und/oder zweiten Dichtungsring eingebettet und dichtet mit jeweils einer parallel zur Messzellenebene verlaufenden Stirnseite oder axialen Innenseite zumindest abschnittsweise außerhalb (links und rechts) des Strömungskanals gegen die erste bzw. zweite Flachseite des scheibenförmigen dritten Dichtungselements. Mit anderen Worten dichtet das scheibenförmige dritte Dichtungselement in dem ausgefüllten Raumbereich links und rechts des Strömungskanals flächig gegen die erste und zweite Fensterscheibe.

Insbesondere liegt im montierten Zustand die erste Fensterscheibe flach auf nur einer ersten Flachseite des scheibenförmigen dritten Dichtungselements an und/oder die zweite Fensterscheibe liegt flach auf nur einer der ersten Flachseite gegenüberliegenden zweiten Flachseite des scheibenförmigen dritten Dichtungselements an und die erste und/oder zweite Fensterscheibe werden von dem scheibenförmigen dritten Dichtungselement insbesondere nicht beidseits umgriffen.

Vorzugsweise liegt im montierten Zustand der erste Dichtungsring an der ersten Fensterscheibe ausschließlich an deren umlaufender Schmalseite an und umgreift insbesondere die erste Fensterscheibe nicht beidseits und/oder der zweite Dichtungsring liegt an der zweiten Fensterscheibe ausschließlich an deren umlaufender Schmalseite an und umgreift insbesondere die zweite Fensterscheibe nicht beidseits.

Insbesondere weisen der erste und/oder zweite Dichtungsring und/oder das scheibenförmige dritte Dichtungselement keine Bereiche mit dünnerer Wandstärke oder gar Taschen auf, in welche die erste und/oder zweite Fensterscheibe eingesetzt würden.

Vorzugsweise werden der erste und/oder zweite Dichtungsring und/oder das scheibenförmige dritte Dichtungselement aus elastomerem Plattenmaterial ausgestanzt oder ausgeschnitten, z.B. lasergeschnitten. Der erste und/oder zweite Dichtungsring weisen dabei vorzugsweise einen rechteckigen Querschnitt auf.

Insbesondere sind das erste und/oder zweite Dichtungsring und/oder das scheibenförmige dritte Dichtungselement geometrisch als allgemeine Hohlzylinder geformt, wobei das scheibenförmige dritte Dichtungselement eine unregelmäßige Zylinder-Leitkurve aufweist. Insbesondere sind die erste und zweite Flachseite des scheibenförmigen dritten Dichtungselements also, im Wesentlichen vollständig, eben, bzw. das scheibenförmige dritte Dichtungselement ist, im Wesentlichen vollständig, eben.

Auch dies trägt zur Einfachheit der Herstellung und Stabilität der drei Dichtungselemente bei.

Wenn der erste und/oder zweite Dichtungsring und/oder das scheibenförmige dritte Dichtungselement aus elastomerem Plattenmaterial hergestellt sind, weisen diese vorzugsweise auch keine aus der Plattenebene hervorspringenden Formelemente auf.

Vorzugsweise definieren die erste und/oder zweite Fensterscheibe jeweils eine umlaufende äußere Schmalseite und sind in den ersten und/oder zweiten Dichtungsring eingesetzt, so dass der erste bzw. zweite Dichtungsring ringförmig umlaufend um die umlaufende äußere Schmalseite der ersten bzw. zweiten Fensterscheibe verläuft. Der Messzellengrundkörper und/oder die Verschlussplatte weisen ferner eine erste bzw. zweite Fensteröffnung jeweils mit einer radialen umlaufenden inneren Ringwandung auf, in welche der erste bzw. zweite Dichtungsring mit der ersten bzw. zweiten Fensterscheibe eingesetzt wird.

Im montierten Zustand dichtet der erste und/oder zweite Dichtungsring mit seiner radial umlaufenden Innenseite (innerer Zylindermantel) vorzugsweise fluiddicht gegen die umlaufende Schmalseite der ersten bzw. zweiten Fensterscheibe und dichtet mit seiner radialen Außenseite (äußerer Zylindermantel) fluiddicht gegen eine umlaufende innere Ringwandung der ersten bzw. zweiten Fensteröffnung, um so die erste und/oder zweite Fensterscheibe in den Messzellengrundkörper bzw. die Verschlussplatte einzusetzen und mit dem ersten bzw. zweiten Dichtungsring darin abzudichten.

Die erste und/oder zweite Fensteröffnung sind vorzugsweise von außen in Richtung des Probenvolumens verjüngend geformt sind, um im montierten Zustand die radiale Innenseite des ersten und/oder zweiten Dichtungsrings radial gegen die umlaufende Schmalseite der ersten bzw. zweiten Fensterscheibe zu pressen.

Vorzugsweise umfasst die erste Messzellenbaugruppe einen ersten Befestigungsring, welcher auf die Außenseite des Messzellengrundkörpers geschraubt ist und die erste Fensterscheibe in der ersten Fensteröffnung hält und/oder die zweite Messzellenbaugruppe umfasst einen zweiten Befestigungsring, welcher auf die Außenseite der Verschlussplatte geschraubt ist und die zweite Fensterscheibe in der zweiten Fensteröffnung hält.

Vorzugsweise können so die erste und zweite Fensterscheibe bei an der ersten bzw. zweiten Messzellenbaugruppe montiertem ersten bzw. zweiten Befestigungsring und geöffneter Messzelle, also voneinander getrennter erster und zweiter Messzellenbaugruppe, zwar klemmend gehalten werden, so dass die erste bzw. zweite Messzellenbaugruppe mit dem ersten bzw. Dichtungsring und dem ersten bzw. zweiten Fenster jeweils als Baueinheit handhabbar sind, andererseits können die erste bzw. zweite Fensterscheibe ohne Entfernen des ersten bzw. zweiten Befestigungsrings manuell nach innen herausgedrückt werden.

Dies führt im Bereich der Fensterscheiben vorzugsweise zu einem zumindest 5-schichtigen sandwichartigen Schichtaufbau der Messzelle, und zwar mit folgenden Schichten:
1. Schicht: Erster Befestigungsring,
2. Schicht: Messzellengrundkörper mit erstem Dichtungsring und erster Fensterscheibe,
3. Schicht: Probenvolumen und scheibenförmiges drittes Dichtungselement,
4. Schicht: Verschlussplatte mit zweitem Dichtungsring und zweiter Fensterscheibe,
5. Schicht: Zweiter Befestigungsring.

Gemäß einer bevorzugten Ausführungsform bilden die der Verschlussplatte zugewandte Innenseite des Messzellengrundkörpers zusammen mit der ersten Fensterscheibe und dem die erste Fensterscheibe umgebenden ersten Dichtungsring zumindest abschnittsweise eine gemeinsame erste bündige Dichtfläche und/oder die dem Messzellengrundkörper zugewandte Innenseite der Verschlussplatte bilden zusammen mit der zweiten Fensterscheibe und dem die zweite Fensterscheibe umgebenden zweiten Dichtungsring zumindest abschnittsweise eine gemeinsame zweite bündige Dichtfläche.

Dies hat den Vorteil, dass die erste und/oder zweite Messzellenbaugruppe jeweils gegen eine ebene Flachseite der Dichtungsscheibe bzw. Strömungsscheibe dichten können und die beiden Flachseiten der Dichtungsscheibe bzw. Strömungsscheibe keine besondere Oberflächen-Formgebung benötigen, sondern schlicht ebene Flächen sein können.

Mit anderen Worten liegen im montierten Zustand die dem scheibenförmigen dritten Dichtungselement zugewandte Flachseite aus Messzellengrundkörper, erstem Dichtungsring und erster Fensterscheibe bündig an der einen ebenen Flachseite des scheibenförmigen dritten Dichtungselements an und/oder die dem scheibenförmigen dritten Dichtungselement zugewandte Flachseite aus Verschlussplatte, zweitem Dichtungsring und zweiter Fensterscheibe liegen bündig an der anderen gegenüberliegenden ebenen Flachseite des scheibenförmigen dritten Dichtungselements an.

In vorteilhafter Weise brauchen keine Vertiefungen für das scheibenförmige dritte Dichtungselement in die Dichtflächen des Messzellengrundkörpers und/oder der Verschlussplatte eingefräst zu werden, sondern die Dichtfläche des Messzellengrundkörpers und/oder die Dichtfläche der Verschlussplatte liegen lediglich planparallel auf dem scheibenförmigen dritten Dichtungselement auf.

Gemäß einer bevorzugten Ausführungsform weisen der Messzellengrundkörper und die Verschlussplatte jeweils eine einander zugewandte innere Dichtfläche auf, zwischen denen das scheibenförmige dritte Dichtungselement eingesetzt ist und gegen welche das scheibenförmige dritte Dichtungselement beidseits dichtet, wobei die innere Dichtfläche des Messzellengrundkörpers vorzugsweise einen integralen ersten Dichtwulst und/oder die innere Dichtfläche der Verschlussplatte vorzugsweise einen integralen zweiten Dichtwulst aufweist, wobei sich der erste und/oder zweite Dichtwulst in jeweils eine der beiden gegenüberliegenden Flachseiten des scheibenförmigen dritten Dichtungselements eingräbt.

Hierdurch kann in vorteilhafter Weise die Dichtungswirkung weiter verbessert werden.

Vorzugsweise läuft der erste und/oder zweite Dichtungswulst parallel zur Messzellenebene vollständig um den ersten bzw. zweiten Dichtungsring mit der ersten bzw. zweiten Fensterscheibe, um den Strömungskanal, und um den Bereich der Mündungen der Zuleitung und Ableitung um.

Vorzugsweise weisen der Messzellengrundkörper und die Verschlussplatte zueinander komplementäre Gelenkteile oder Scharniermittel auf, mittels welchen die erste und zweite Messzellenbaugruppe auf- und zu geklappt werden können, um die Messzelle zu schließen und zu öffnen.

Bevorzugt weist hierzu der Messzellengrundkörper an einer Schmalseite zumindest eine schlitzförmige Gelenktasche auf und die Verschlussplatte weist zumindest einen Gelenkstift auf, wobei zum Verschließen der Messzelle der Gelenkstift vom Benutzer in die schlitzförmige Gelenktasche eingesetzt wird, um bei eingesetztem Gelenkstift die zweite Messzellenbaugruppe mittels des so gebildeten Scharniergelenks relativ zu der ersten Messzellenbaugruppe zu schwenken und wie bei einer Tür mittels der Schwenkbewegung die Messzelle zu Schließen und zu Öffnen.

Vorzugsweise weist die Messzelle gegenüber dem Scharniergelenk einen Schnellspannmechanismus auf, mittels welchem die erste und zweite Messzellenbaugruppe mit dem dazwischenliegenden scheibenförmigen dritten Dichtungselement gegeneinander verspannbar sind, derart, dass das Probenvolumen durch die Verspannung fluiddicht abgedichtet wird.

Vorzugsweise weist der Schnellspannmechanismus ein Hand-Drehrad und einen Exzenterhebel auf, welche derart ausbildet sind, dass zum Schließen der Messzelle das Hand-Drehrad um eine Achse senkrecht zur Messzellenebene gedreht wird, um eine Anlage- und Spannfläche des Hand-Drehrads mit der zweiten Messzellenbaugruppe in Überlapp zu bringen und nachfolgend die Anlagefläche das Hand-Drehrads mittels des Exzenterhebels gegen die zweite Messzellenbaugruppe verspannt wird, und welche derart ausbildet sind, dass zum Öffnen der Messzelle der Exzenterhebel entspannt wird und nachfolgend das Hand-Drehrad um die Achse senkrecht zur Messzellenebene gedreht wird, bis die Anlage- und Spannfläche des Hand-Drehrads aus dem Überlapp mit der zweiten Messzellenbaugruppe heraus gedreht wird und die Verschlussplatte freigibt, so dass die zweite Messzellenbaugruppe von der ersten Messzellenbaugruppe weggeklappt werden kann.

Die Messzelle weist vorzugsweise noch eines, mehrere oder alle der folgenden Merkmale auf:
- die Zuleitung und/oder die Ableitung sind als Bohrungen in dem Messzellengrundkörper ausgebildet,
- ein Zuleitungsrohr mit einer Anschlusskupplung ist umfasst, welches an die Zuleitungsbohrung anschlossen ist,
- ein Ableitungsrohr mit einer Anschlusskupplung ist umfasst, welches an die Ableitungsbohrung anschlossen ist,
- die Messzelle ist auf einer länglichen Grundplatte befestigt, wobei die Grundplatte insbesondere eine Nut- oder Federführung aufweist, um die Messzelle mit der Grundplatte in ein Partikelgrößenmessgerät einzuschieben,
- die Messzelle weist einen oberen Handgriff auf, um die Messzelle in ein Partikelgrößenmessgerät einzuschieben,
- die Messzelle weist eine sich quer zu der Grundplatte verlaufende Abschlussplatte auf, welche insbesondere zumindest eine oder zwei Bohrungen aufweist, durch welche sich das Zuleitungsrohr und/oder das Ableitungsrohr erstrecken, um von außen jeweils einen Dispersionsschlauch ankuppeln zu können.

Die Erfindung betrifft auch solo das scheibenförmige dritte Dichtungselement als Ersatz- oder Nachrüstteil für die Messzelle.

Als Ersatz- oder Nachrüstteil für die Messzelle ist das scheibenförmige dritte Dichtungselement in Form einer Strömungsscheibe gekennzeichnet durch folgende Merkmale:
Die Strömungsscheibe weist eine Dicke im Bereich zwischen 1 mm und 10 mm, vorzugsweise im Bereich zwischen 2 mm und 6 mm, auf.

Die Strömungsscheibe ist aus einer Platte aus elastomerem Material mit einer Dicke im Bereich zwischen 1 mm und 10 mm, vorzugsweise im Bereich zwischen 2 mm und 6 mm hergestellt und besteht lediglich aus einem Stück dieser Platte aus elastomerem Material, und weist zwei ebene Flachseiten und vorzugsweise keine aus der Plattenebene hervorspringenden Formelemente auf.

Die Strömungsscheibe ist aus der Platte aus elastomerem Material ausgestanzt oder ausgeschnitten.

Die Strömungsscheibe weist eine Breite im Bereich zwischen 30 mm und 250 mm, vorzugsweise im Bereich zwischen 50 mm und 150 mm, und eine Länge im Bereich zwischen 50 mm und 300 mm, vorzugsweise im Bereich zwischen 80 mm und 200 mm, auf.

Die Strömungsscheibe definiert einen Strömungskanal mit einer Breite im Bereich zwischen 5 mm und 100 mm, vorzugsweise im Bereich zwischen 10 mm und 50 mm, und einer Länge im Bereich zwischen 30 mm und 250 mm, vorzugsweise im Bereich zwischen 70 mm und 150 mm.

Der Strömungskanal ist aus der Platte aus elastomerem Material ausgestanzt oder ausgeschnitten und wird durch eine innere Schmalseite in der Strömungsscheibe umlaufend begrenzt. An der umlaufenden inneren Schmalseite bzw. an der Strömungsscheibe sind insbesondere keine Taschen oder Vertiefungen zum Einsetzen einer Fensterscheibe vorhanden.

### Kurzbeschreibung der Figuren

Es zeigen:
- Fig. 1: eine dreidimensionale Explosionsdarstellung der Messzellenhalterung mit einer Ausführungsform der erfindungsgemäßen Messzelle,
- Fig. 2: eine dreidimensionale Explosionsdarstellung der Messzelle aus Fig. 1,
- Fig. 3: eine dreidimensionale Einzeldarstellung der Strömungsscheibe aus Fig. 2 von der Seite der Verschlussplatte,
- Fig. 4: eine dreidimensionale Einzeldarstellung der Strömungsscheibe aus Fig. 2 von der Seite des Messzellengrundkörpers,
- Fig. 5: eine Draufsicht von rechts auf die in der Halterung montierte Messzelle,
- Fig. 6: einen horizontalen Schnitt durch die Anordnung aus Fig. 5 entlang der Linie F-F,
- Fig. 7: einen horizontalen Schnitt durch die Anordnung aus Fig. 5 entlang der Linie G-G,
- Fig. 8: einen horizontalen Schnitt durch die Anordnung aus Fig. 5 entlang der Linie H-H,
- Fig. 9: eine vergrößerte Darstellung des Bereichs um das Probenvolumen aus Fig. 6,
- Fig. 10: einen vertikalen Schnitt der Anordnung aus Fig. 5 entlang der Linie I-I,

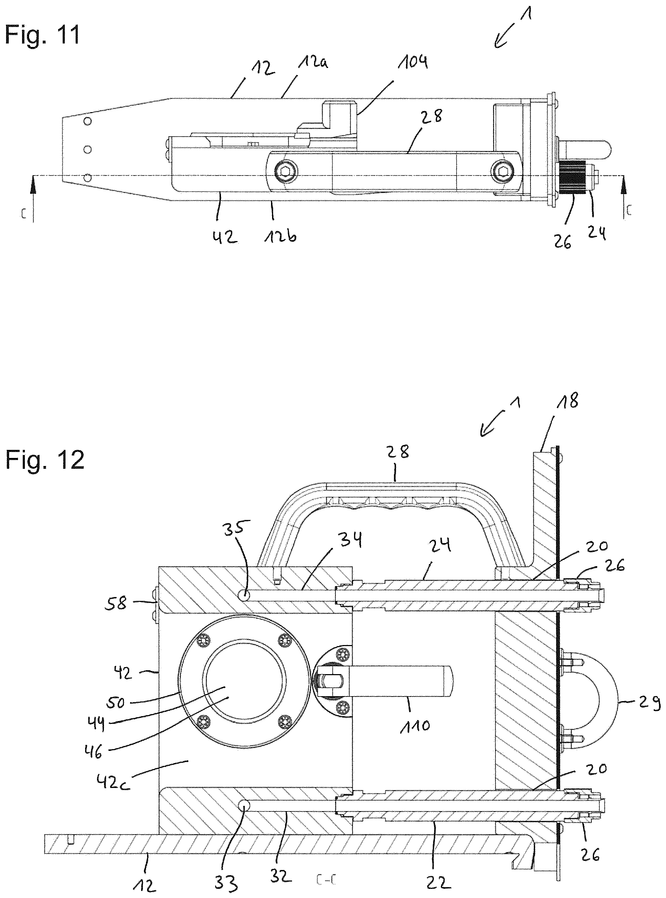

- Fig. 11: eine Draufsicht von oben auf die Messzelle mit Messzellenhalterung,
- Fig. 12: einen vertikalen Schnitt durch die Anordnung aus Fig. 11 entlang der Linie C-C,
- Fig. 13: eine dreidimensionale Darstellung der aufgeklappten Messzelle ohne die Strömungsscheibe,
- Fig. 14: eine dreidimensionale Ansicht des Messzellengrundkörpers,
- Fig. 15: eine Draufsicht auf die Innenseite der Verschlussplatte.

### Detaillierte Beschreibung der Erfindung

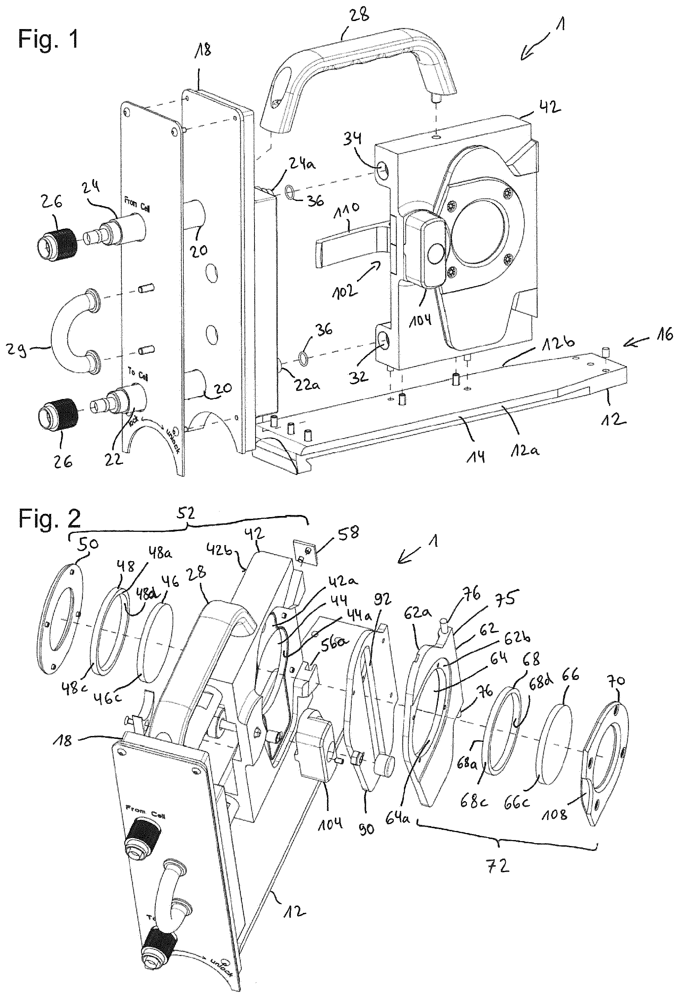

Bezugnehmend auf Fig. 1 und 2 wird die Messzelle 1 an einer Messzellenhalterung 16 mit einer Messzellengrundplatte 12 festgeschraubt. Die Messzellengrundplatte 12 weist an ihren langen Schmalseiten 12a, 12b Feder-Vorsprünge 14 auf, die in eine korrespondierende Nut in einem Laserpartikelgrößenmessgerät (nicht dargestellt) eingeschoben werden können.

Die Messzellenhalterung 16 wird linksseitig vertikal von einer Abschlussplatte 18 begrenzt, welche ebenfalls auf der Messzellengrundplatte 12 aufgeschraubt ist. Ein Zuleitungsrohr 22 und ein Ableitungsrohr 24 sind in Bohrungen 20 in der Abschlussplatte 18 eingebaut. Das Zuleitungsrohr 22 und das Ableitungsrohr 24 werden mit ihrem jeweiligen inneren Ende 22a, 24a in einen Zuleitungskanal 32 bzw. einen Ableitungskanal 34 mit jeweils einer Dichtung 36 eingeschraubt, um die Fluid-Kommunikation mit dem Probenvolumen der Messzelle 1 herzustellen. An der Außenseite des Zuleitungs- und Ableitungsrohrs 22, 24 sind Schlauchanschlusskupplungen 26 angebracht, um die Messzelle 1 mittels Schläuchen mit einer Dispergiervorrichtung (nicht dargestellt) zu verbinden. In dem vorliegenden Beispiel handelt es sich bei der Messzelle 1 um eine Nass-Messzelle, welche mit einer Nass-Dispergiervorrichtung verbunden wird. Durch den Zuleitungskanal 32 wird die Dispersion in die Messzelle 1 bzw. in das Probenvolumen in der Messzelle 1 gepumpt, fließt durch Messzelle 1 hindurch und wird durch den Ableitungskanal 34 wieder zu der Nass-Dispergiervorrichtung zurückgeführt, sodass die Messzelle 1 im Durchfluss betrieben wird.

An der Oberseite der Messzelle ist ein Handgriff 28 angeschraubt, um die Messzelle aus dem Laser-Partikelgrößenmessgerät herausziehen zu können und wieder einsetzen zu können. Alternativ kann hierfür auch der seitliche Fingergriff 29 verwendet werden.

Die Messzelle 1 weist einen Messzellengrundkörper 42 auf, welcher auf die Messzellengrundplatte 12 aufgeschraubt wird und durch welchen sich der Zuleitungskanal 32 und der Ableitungskanal 34 als Bohrungen erstrecken. Der Messzellengrundkörper 42 weist eine zentrale erste Fensteröffnung 44 auf, in welche eine erste Fensterscheibe 46 mit einem ersten Dichtungsring 48 eingesetzt wird. Die erste Fensterscheibe 46 und der erste Dichtungsring 48 werden mit einem ersten Befestigungsring 50 in der ersten Fensteröffnung 44 gegen Herausfallen nach außen gesichert. Hierzu wird der erste Befestigungsring 50 auf die Außenseite 42b des Messzellengrundkörpers 42 aufgeschraubt.

Eine Verschlussplatte 62 bildet das Gegenstück zu dem Messzellengrundkörper 42. Die Verschlussplatte 62 weist eine zweite Fensteröffnung 64 auf, in welche eine zweite Fensterscheibe 66 mit einem zweiten Dichtungsring 68 eingesetzt wird. Die zweite Fensterscheibe 66 und der zweite Dichtungsring 68 werden mit einem zweiten Befestigungsring 70 in der zweiten Fensteröffnung 64 gegen Herausfallen nach außen gesichert. Hierzu wird der zweite Befestigungsring 70 auf die Außenseite 62b der Verschlussplatte 62 aufgeschraubt. Der Messzellengrundkörper 42 und/oder die Verschlussplatte 62 können z.B. aus Edelstahl gefräst sein. Die Dichtungsringe 48, 68 sind vorzugsweise kreisrund bzw. bestehen aus einem kreisförmigen Ring aus elastomerem Material, z.B. ein Fluorelastomer oder Fluorkautschuk (FKM). Bei bestimmten Anforderungen an die chemische Beständigkeit können der erste und/oder zweite Dichtungsring (48, 68) und/oder die Strömungsscheibe 90 auch aus einem Perflourkautschuk (FFKM), z.B. Kalrez^{®}, hergestellt werden bzw. bestehen.

Wenn die erste Fensterscheibe 46 mit dem ersten Dichtungsring 48 in den Messzellengrundkörper 42 eingesetzt ist und mit dem ersten Befestigungsring 50 gesichert sind, klemmen die erste Fensterscheibe 46 und der erste Dichtungsring 48 in der ersten Fensteröffnung 44 und diese Teile bilden gemeinsam eine erste Messzellenbaugruppe 52, welche eine für den Benutzer handhabbare erste Baueinheit darstellt. In gleicher Weise bilden die Verschlussplatte 62 mit der in die zweite Fensteröffnung 64 eingesetzten zweiten Fensterscheibe 66, dem zweiten Dichtungsring 68 und dem aufgeschraubten zweiten Befestigungsring 70 eine zweite Messzellenbaugruppe 72, welche ebenfalls eine für den Benutzer handhabbare zweite Baueinheit darstellt. Dabei liegen die radial umlaufenden Außenseiten 48c, 68c des ersten bzw. zweiten Dichtungsrings 48, 68 an einer radial umlaufenden inneren Ringwandung 44a, 64a des ersten bzw. zweiten Messzellenfensters 44, 64 an.

Die Innenseite des Messzellengrundkörpers 42 bildet eine erste innere Dichtfläche 42a und die Innenseite der Verschlussplatte 62 bildet eine zweite innere Dichtfläche 62a, zwischen welchen ein scheibenförmiges drittes Dichtungselement 90 in Form einer Dichtungsscheibe mit einem Strömungskanal 92 eingesetzt wird.

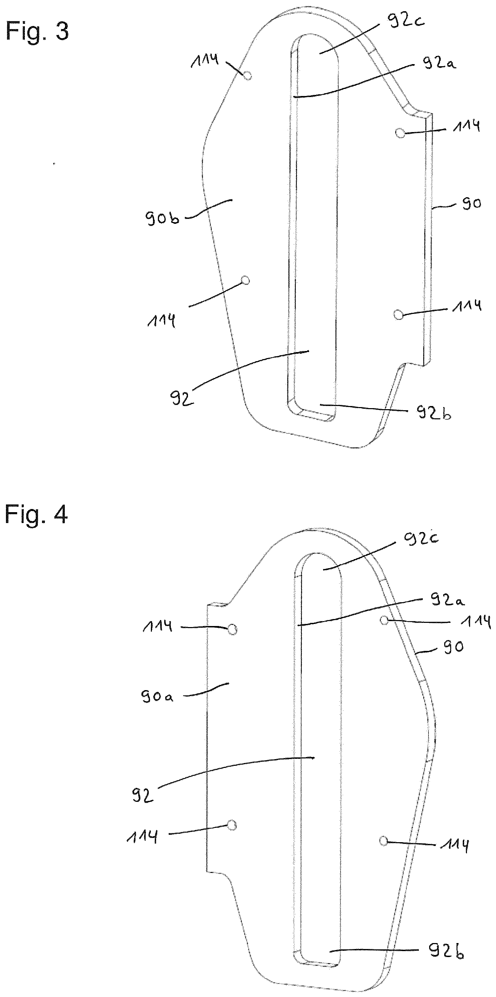

Bezugnehmend auf die Fig. 3 und 4 bildet die Dichtungsscheibe mit dem Strömungskanal 92 eine Strömungsscheibe 90. Die Strömungsscheibe 90 ist aus einer Platte aus elastomerem Material, z.B. aus Fluorkautschuk (FKM) oder Perfluorkautschuk (FFKM), z.B. aus einer Viton^{®}- oder Kalrez^{®}-Platte mittels Laserschneiden ausgeschnitten und hat grundsätzlich die Form einer ebenen Platte mit zwei ebenen Flachseiten 90a, 90b, welche die Dichtflächen der Strömungsscheibe 90 bilden. Im Inneren der Strömungsscheibe 90 ist der Strömungskanal 92 herausgeschnitten, welcher sich lateral zu der Messzellenebene E in der Strömungsscheibe 90 erstreckt.

Mit anderen Worten bilden die erste und zweite Messzellenbaugruppe 52, 72 zwei zueinander korrespondierende zusammenfügbare Messzellenhälften, welche mittels der Strömungsscheibe 90 als dazwischenliegende Dichtungsscheibe gegeneinander gedichtet werden, wobei "Hälften" nicht mathematisch zu verstehen ist.

Der Strömungskanal 92 hat eine im Wesentlichen längliche Form und wird umlaufend durch eine innere Schmalseite 92a begrenzt. Wenn die Messzelle 1 zusammengebaut wird, werden die erste und zweite Messzellenbaugruppe 52, 72 mit dazwischen gefügter Strömungsscheibe 90 zusammengesetzt und gegeneinander verspannt, so dass der Strömungskanal 92 das Probenvolumen 94 in der Messzelle definiert. Im montierten Zustand wird das Probenvolumen 94 parallel zur Messzellenebene E auf der einen Seite von der ersten Fensterscheibe 46 bzw. von der ersten Messzellenbaugruppe 52 und auf der anderen Seite von der zweiten Fensterscheibe 66 bzw. von der zweiten Messzellenbaugruppe 72 begrenzt. In der Messzellenebene E wird das Probenvolumen 94 durch die umlaufende innere Schmalseite bzw. Ringwandung 92a begrenzt, sodass ein allseits begrenztes länglich ausgedehntes Probenvolumen 94 zum Durchleiten der Dispersion entsteht.

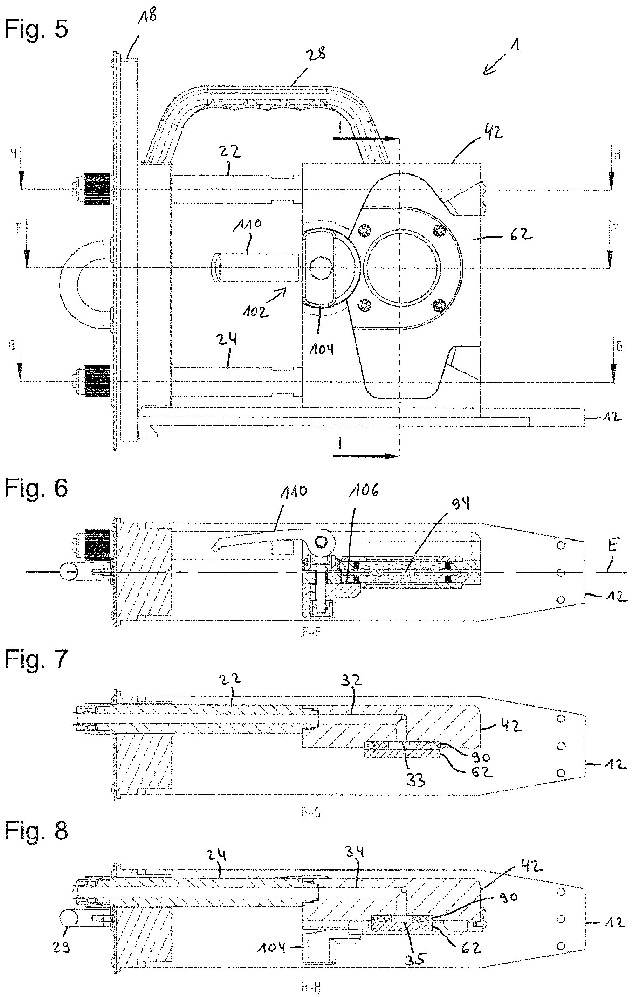

Bezugnehmend auf die Fig. 7 und 8 münden der Zuleitungskanal 32 und der Ableitungskanal 34 an der Mündung 33, 35 in ein unteres Ende 92b bzw. in ein oberes Ende 92c des Strömungskanals 92. Die erste und zweite Messzellenbaugruppe 52, 72 definieren demnach, wenn sie zusammengefügt sind, gemeinsam mit dem von der Mündung 33 zu der Mündung 35 erstreckenden Strömungskanal 92 der Strömungsscheibe 90, das Probenvolumen 94 innerhalb der Messzelle 1.

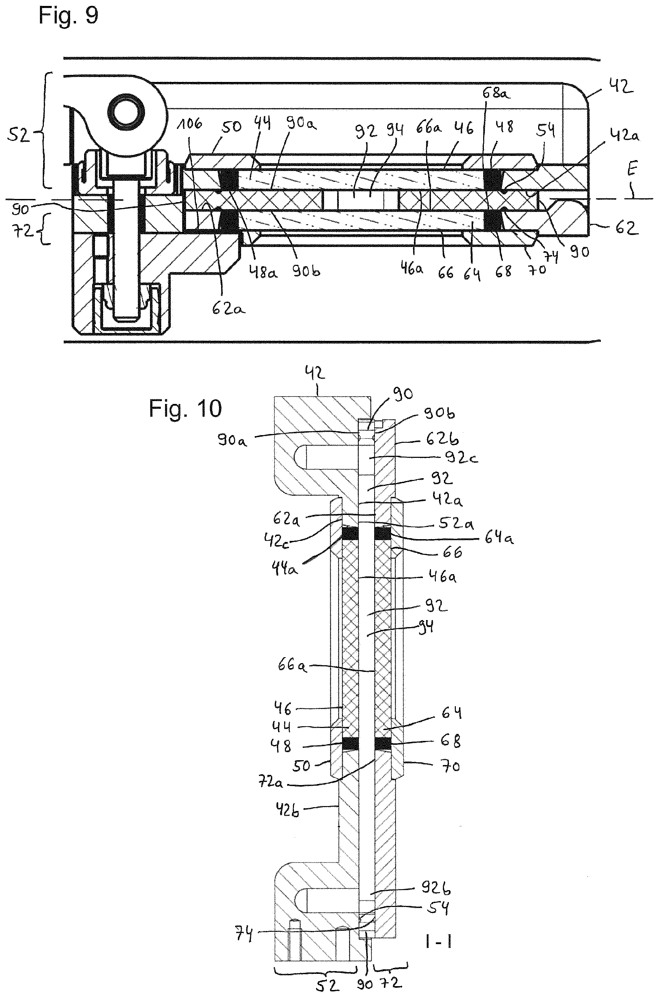

Wie am besten in Fig. 9 und 10 zu sehen ist, verläuft die Fensterscheibe 46 mit dem ersten Dichtungsring 48 bündig mit der Dichtfläche 42a des Messzellengrundkörpers 42, sodass eine im Großen und Ganzen erste ebene innere Dichtfläche 52a der ersten Messzellenbaugruppe 52 entsteht. In gleicher Weise verläuft die zweite Fensterscheibe 66 mit dem zweiten Dichtungsring 68 bündig mit der Dichtfläche 62a der Verschlussplatte 62, sodass auch hier eine im Wesentlichen zweite ebene innere Dichtfläche 72a der zweiten Messzellenbaugruppe 72 entsteht. Die Strömungsscheibe 90 liegt demnach sandwichartig zwischen der ersten und zweiten Messzellenbaugruppe 52, 72 und dichtet beidseits flächig gegen deren erste bzw. zweite ebene innere Dichtflächen 52a, 72a.

Wie am besten in Fig. 10 zu sehen ist, bilden die erste und zweite Messzellenbaugruppe 52, 72 mit der dazwischen eingespannten Strömungsscheibe 90 eine sandwichartige fünfschichtige Anordnung gesehen von links nach rechts bestehend aus i) dem ersten Befestigungsring 50, ii) dem, in diesem Beispiel ausgedünnten, zentralen Bereich 42c des Messzellengrundkörpers 42 mit planparallel eingesetzter erster Fensterscheibe 46 und umlaufendem ersten Dichtungsring 48, iii) der Strömungsscheibe 90, iv) der Verschlussplatte 62 mit planparallel eingesetzter zweiter Fensterscheibe 66 und umlaufendem zweiten Dichtungsring 68 und v) dem zweiten Befestigungsring 70.

Wie am besten in Fig. 9 zu sehen ist, dichten die als drei separate Dichtungselemente ausgebildeten beiden Dichtungsringe 48, 68 und die dazwischenliegende Strömungsscheibe 90 zumindest bereichsweise gegeneinander, nämlich insbesondere in den Bereichen seitlich (links und rechts) des Strömungskanals 92. Insbesondere dichten der erste und zweite Dichtungsring 48, 68 mit ihren jeweiligen inneren axialen Stirnseiten 48a, 68a gegen die beiden Flachseiten 90a bzw. 90b der Strömungsscheibe 90 und zwar planparallel mit den Innenseiten 46a, 66a der beiden Fensterscheiben 46, 66 und den inneren Dichtflächen 42a, 62a des Messzellengrundkörpers 42 bzw. der Verschlussplatte 62.

Der Strömungskanal 92 verläuft demnach transversal in der Messzellenebene E zwischen den beiden Fensterscheiben 46, 66 und bis zu einem unteren und oberen Ende 92b, 92c, in welche der Zuleitungskanal 32 bzw. der Ableitungskanal 34 münden.

Sowohl der erste und zweite Dichtungsring 48, 68 als auch die Strömungsscheibe 90 sind in einfacher Weise aus einem elastomeren Plattenmaterial, zum Beispiel aus einer ebenen Fluorkautschuk- oder Perfluorkautschuk-Platte (z.B Viton^{®} oder Kalrez^{®}) ausgestanzt oder mittels Laserschneiden herausgeschnitten. Daher weisen die Dichtungselemente 48, 68, 90 vorzugsweise eine im mathematisch geometrischen Sinne (sehr flache) zylindrische Form auf. Insbesondere die Strömungsscheibe 90 hat die Form einer einfachen Scheibe mit gewissen Öffnungen, hat aber keine von einer zylindrischen Form abweichende dreidimensionale Formgebung, so dass die Strömungsscheibe (ohne individuelle Heißformung) mittels Stanzen oder Schneiden aus einem einfachen Plattenmaterial hergestellt werden kann. Der erste und zweite Dichtungsring 48, 68 haben vorzugsweise einen rechteckigen Querschnitt (Fig. 9, 10). Eine individuelle (Heiß-)Pressform zum Herstellen der Dichtungselemente ist daher nicht notwendig. Der Messzellengrundkörper 42 und/oder Verschlussplatte 62 benötigen ferner keine (Ring-)Nuten zum Einsetzen der Dichtungsringe, wenn gleich solche nicht kategorisch ausgeschlossen sein sollen.

Die Dicke der Strömungsscheibe 90 beträgt 4 mm und die Dicke des ersten und zweiten Dichtungsrings 48, 68 sowie der ersten und zweiten Fensterscheibe 46, 66 betragen ebenfalls 4 mm. Die Dicke der Strömungsscheibe 90 definiert aufgrund der ebenen Formgebung des Dichtungskonzepts die Dicke des Probenvolumens 94, in diesem Beispiel also ebenfalls 4 mm. Die Strömungsscheibe hat in diesem Beispiel eine Höhe von 128,5 mm und eine Breite von 70 mm.

Wie am besten in Fig. 9, 10 und 13-15 zu sehen ist, weisen der Messzellengrundkörper 42 und die Verschlussplatte 62 jeweils einen ringförmigen oder vollständig geschlossenen ersten bzw. zweiten Dichtungswulst 54, 74 auf, welche an den jeweiligen inneren Dichtflächen 42a, 62a des Messzellengrundkörpers 42 und der Verschlussplatte 62 umlaufen. Der erste bzw. zweite Dichtungswulst 54, 74 weist jeweils eine im Wesentlichen längliche Form mit einer kreisförmigen Ausbeulung im Bereich der beiden Fensterscheiben 46, 66 auf. Der erste bzw. zweite Dichtungswulst 54, 74 läuft dabei vollständig geschlossen außen um die zugehörige Fensteröffnung 44, 64, und damit um die zugehörige Fensterscheibe 46, 66 und den zugehörigen Dichtungsring 48, 68 um. Ferner läuft der erste Dichtungswulst 54 am oberen und unteren Ende um die Mündungen 33, 35 der Zuleitungs- und Ableitungskanäle 32, 34 um.

Wie am besten in den Fig. 9 und 10 zu sehen ist, graben sich der erste und zweite Dichtungswulst 54, 74 in die jeweilige Flachseite 90a, 90b der Strömungsscheibe 90 ein und zwar vollständig geschlossen umlaufend um alle anderen Öffnungen bzw. dichtenden Grenzflächen, sodass hiermit eine effektive Dichtung zwischen der ersten und zweiten Messzellenbaugruppe 52, 72 und der dazwischenliegenden Strömungsscheibe 90 erzielt werden kann.

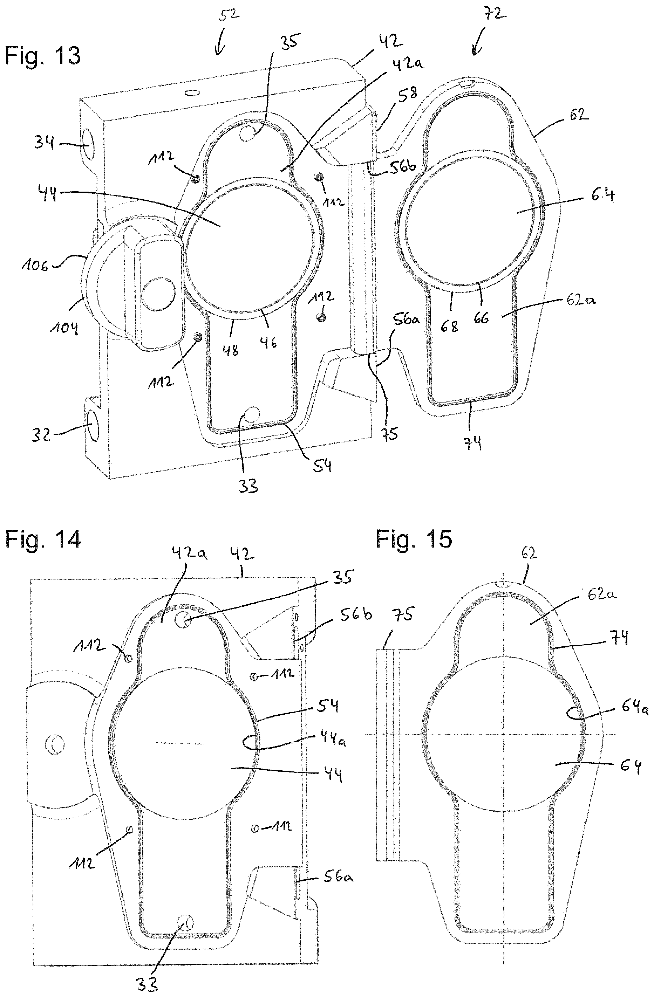

Bezugnehmend auf die Fig. 13 hängt der Benutzer die zweite Messzellenbaugruppe 72 als zweite Baueinheit wie einen Türflügel an der ersten Messzellenbaugruppe 52 als erste Baueinheit auf. Hierzu weist die Verschlussplatte 62 einen Scharnierabschnitt 75 auf. An dem Scharnierabschnitt 75 steckt ein Gelenkstift 76 in der Verschlussplatte 62 (Fig. 2) und der Messzellengrundkörper 42 weist an seinem hinteren Ende zwei Gelenkschlitze oder Gelenktaschen 56a, 56b auf, welche den Gelenkstift 76 aufnehmen. Die obere Gelenktasche 56b ist mit einer Platte 58 verschlossen, sodass der Benutzer den Gelenkstift 76 schräg von unten in die obere Gelenktasche 56b einfädeln und anschließend den unteren Bereich des Gelenkstiftes 76 in die untere Gelenktasche 56a seitlich einführen kann. Dies ist besonders praktisch in der Handhabung. Anschließend kann die gesamte zweite Baugruppe 72 mit der Verschlussplatte 62 und der darin eingesetzten Fensterscheibe 66 und der umlaufenden Ringdichtung 68 sowie dem Befestigungsring 70 als Baueinheit wie ein Türflügel auf und zu geschwenkt werden. Wenn die Strömungsscheibe 90 auf die innere Dichtfläche 42a des Messzellengrundkörpers 42 aufgesetzt ist und am Dichtungswulst 54 anliegt, schwenkt der Benutzer die zweite Messzellenbaugruppe 72 gegen die Strömungsscheibe 90 und verschließt somit das Probenvolumen 94. Um einen fluiddichten Verschluss zu erreichen, werden die erste und zweite Messzellenbaugruppe 52, 72 mit der dazwischenliegenden Strömungsscheibe 90 mit einem Schnellspannmechanismus 102 gegeneinander verspannt.

Der Schnellspannmechanismus 102 umfasst ein asymmetrisches Hand-Drehrad 104, welches mit einer Anlage-und Spannfläche 106 von außen gegen eine korrespondierende Anlage- und Spannfläche 108 der zweiten Messzellenbaugruppe 72, in diesem Beispiel des zweiten Befestigungsrings 70, gedreht wird. Anschließend wird der Exzenterhebel 110 gespannt, um eine sichere Verspannung der ersten und zweiten Messzellenbaugruppe 52, 72 gegen die dazwischenliegende Strömungsscheibe 90 zu erzielen. In dem verspannten Zustand graben sich, wie am besten in Fig. 9 zu sehen ist, die beiden Dichtungswülste 54, 74 in die Strömungsscheibe 90 ein, und zwar ringförmig umlaufend unter anderem außerhalb der beiden Dichtungsringe 48, 68, wodurch eine effektive und sichere fluiddichte Abdichtung der Messzelle als erreicht werden kann.

Zum Öffnen, zum Beispiel um die Messzelle 1 zu reinigen, öffnet der Benutzer den Exzenterhebel 110, dreht das Handdrehrad 104 aus der Kommunikation mit der Verschlussplatte 62, bzw. des daran befestigten zweiten Befestigungsrings 70 und kann anschließend die Messzelle 1 wieder aufklappen, indem die zweite Messzellenbaugruppe 72 von der ersten Messzellenbaugruppe 52 und der Strömungsscheibe 90 weggeschwenkt wird. Anschließend kann der Benutzer die Strömungsscheibe 90 ohne Mühe von der, abgesehen von dem Dichtungswulst 54, ebenen Dichtfläche 42a abnehmen. Um die Strömungsscheibe 90 beim Öffnen und Schließen der Messzelle 1 gegen Herunterfallen zu sichern und exakt positionieren, sind an der Innenseite des Messzellengrundkörpers in diesem Beispiel vier Positionierungsstifte 112 ausgeformt, welche in korrespondierende Öffnungen 114 in der Strömungsscheibe 90 eingreifen. Nichtsdestotrotz, lässt sich die Strömungsscheibe 90 vom Benutzer sehr einfach von dem Messzellengrundkörper 42 abnehmen, was unter anderem an der im Großen und Ganzen ebenen schichtartigen Dichtungskonstruktion mit den drei separaten Dichtungselementen 48, 68, 90 liegt bzw. daran liegt, dass die Strömungsscheibe lediglich flach auf der im Großen und Ganzen ebenen Innenfläche der ersten Messzellenbaugruppe 52 aufliegt und insbesondere nicht in spezielle Öffnungen, Nuten oder Ähnliches in dem Messzellengrundkörper 42 eingefügt werden muss. Mit anderen Worten liegt die Strömungsscheibe 90 vorzugsweise lediglich flächig einerseits an der im Wesentlichen ebenen Innenseite des Messzellengrundkörpers 42 bzw. der ersten Messzellenbaugruppe 52 und andererseits an der im Wesentlichen ebenen Innenseite der Verschlussplatte 62 bzw. der zweiten Messzellenbaugruppe 52 an.

Bezugnehmend auf die Fig. 9 und 10 sind die erste und zweite Fensteröffnung 44, 64 in dem Messzellengrundkörper 42 bzw. in der Verschlussplatte 62 in Richtung der Strömungsscheibe 90 sich verjüngend ausgebildet, so dass die radial umlaufenden Ringwandungen 44a, 64a des ersten und zweiten Messzellenfensters 44, 64 konisch verlaufen. Dadurch werden der erste und zweite Dichtungsring 48, 68 mit ihren radial umlaufenden inneren Schmalseiten 48d, 68d radial von außen gegen die radial umlaufenden äußeren Schmalseiten 46c, 66c der ersten bzw. zweiten Fensterscheibe 46, 66 gepresst, wodurch die Dichtwirkung verbessert werden kann. Ferner werden die Fensterscheiben 46, 66 bei aufgeschraubten Befestigungsringen 50, 70 mittels der Dichtungsringe 48, 68 in den zugehörigen Fensteröffnungen 44, 64 klemmend gehalten, sodass diese nicht ohne weiteres herausfallen können. Auch die Klemmwirkung kann durch die Verjüngung der Fensteröffnungen 44, 64 verbessert werden. Trotzdem kann der Benutzer bei geöffneter Messzelle die Fensterscheiben 46, 66 einfach nach innen herausdrücken, ohne an den Dichtungsringen 48, 68 herumfummeln zu müssen und ohne die Befestigungsringe 50, 70 abschrauben zu müssen. Hierzu braucht der Benutzer lediglich mit dem Finger von außen gegen die jeweilige Fensterscheibe 46, 66 zu drücken, wenn die Messzelle 1 geöffnet ist, und die jeweilige Fensterscheibe 46, 66 fällt aus der zugehörigen Fensteröffnung 44, 64 heraus, da die Fensterscheiben 46, 66 lediglich von außen mit den Befestigungsringen 50, 70 befestigt sind und ansonsten mittels den Dichtungsringen 48, 68 klemmend in der zugehörigen Fensteröffnung 44, 64 gehalten werden. Anschließend können ebenso einfach die Dichtungsringe 48, 68 aus der zugehörigen Fensteröffnung 44, 64 nach innen herausgezogen werden, sofern diese nicht bereits beim Herausdrücken der Fensterscheiben ohnehin mit herausfallen.

Zusammenfassend wird mit dem vorgestellten dreiteiligen Dichtungssatz bestehend aus den beiden Dichtungsringen 48, 68 und der flächigen Strömungsscheibe 90 ein einfach herzustellendes, benutzerfreundliches und trotzdem effizient dichtendes Dichtungskonzept bereitgestellt.

Es ist für den Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen.

## Patentansprüche

1. Messzelle (1) für ein Partikelgrößenmessgerät, wobei die Messzelle (1) ein Probenvolumen (94) definiert, durch welches eine Dispersion durchleitbar ist, um ein Beugungsmuster der in der Dispersion enthaltenen dispersen Phase zu erzeugen, wobei die Messzelle (1) eine Messzellenebene (E) definiert und Folgendes aufweist:
eine Zuleitung (32) um die Dispersion in das Probenvolumen (94) einzuleiten und eine Ableitung (34), um die Dispersion aus dem Probenvolumen (94) wieder abzuleiten,
eine erste Messzellenbaugruppe (52) mit einem Messzellengrundkörper (42), einer ersten Fensterscheibe (46), welche an dem Messzellengrundkörper (42) angeordnet ist, und einem ersten Dichtungselement in Form eines ersten Dichtungsrings (48), um die erste Fensterscheibe (46) an dem Messzellengrundkörper (42) abzudichten,
eine zweite Messzellenbaugruppe (72) mit einer Verschlussplatte (62) zum Befestigen an dem Messzellengrundkörper (42), einer zweiten Fensterscheibe (66), welche an der Verschlussplatte (62) angeordnet ist, und einem zweiten Dichtungselement in Form eines zweiten Dichtungsrings (68), um die zweite Fensterscheibe (66) an der Verschlussplatte (62) abzudichten,
ein scheibenförmiges drittes Dichtungselement (90) aus elastomerem Material.

2. Messzelle (1) nach Anspruch 1,
wobei das scheibenförmige dritte Dichtungselement als Strömungsscheibe (90) ausgebildet ist und einen inneren Strömungskanal (92) definiert und flächig zwischen der ersten und zweiten Messzellenbaugruppe (52, 72) angeordnet ist, um die erste und zweite Messzellenbaugruppe (52, 72) gegeneinander abzudichten, wobei sich der Strömungskanal (92) zwischen der Zuleitung und der Ableitung (32, 34) in der Messzellenebene (E) erstreckt und zwischen der ersten und zweiten Messzellenbaugruppe (52, 72) das Probenvolumen (94) bildet.

3. Messzelle (1) nach Anspruch 2,
wobei der Messzellengrundkörper (42) eine erste innere Dichtfläche (42a) und die Verschlussplatte (62) eine zweite innere Dichtfläche (62a) aufweisen, wobei die erste und zweite innere Dichtfläche (42a, 62a) einander zugewandt sind und wobei das scheibenförmige dritte Dichtungselement (90) zwischen der ersten und zweiten inneren Dichtfläche (42a, 62a) eingesetzt ist und gegen die erste und zweite innere Dichtfläche (42a, 62a) dichtet,
wobei die Zuleitung (32) und die Ableitung (34) in einen Bereich zwischen der ersten und zweiten inneren Dichtfläche (42a, 62a) an einem ersten bzw. zweiten Ende (92b, 92c) des Strömungskanals (92) münden und zwar die Zuleitung (32) auf einer Seite des Probenvolumens (94) und die Ableitung (34) auf der gegenüberliegenden Seite des Probenvolumens (94), und
wobei der Strömungskanal (92) von der Mündung (33) der Zuleitung (32) über den zwischen der ersten und zweiten Fensterscheibe (46, 66) von außen sichtbaren Teil des Probenvolumens (94) zu der Mündung (35) der Ableitung (34) verläuft,
insbesondere wobei aus der ersten und/oder zweiten inneren Dichtfläche (42a, 62a) Positionierungsstifte (112) vorspringen, welche in korrespondierende Öffnungen (114) in dem scheibenförmigen dritten Dichtungselement (90) eingreifen, wenn dieses an der ersten bzw. zweiten inneren Dichtfläche (42a, 62a) anliegt.

4. Messzelle (1) nach einem der Ansprüche,
wobei das scheibenförmige dritte Dichtungselement als Strömungsscheibe (90) ausgebildet ist und einen inneren Strömungskanal (92) definiert,
wobei der Strömungskanal (92) von einer inneren Schmalseite (92a) begrenzt wird und im montierten Zustand der sichtbare Teil des Probenvolumens (94) parallel zur Messzellenebene (E) von der ersten und zweiten Fensterscheibe (46, 66) und in der Richtung senkrecht zur Messzellenebene (E) von der inneren Schmalseite (92a) begrenzt wird und/oder
wobei im montierten Zustand die erste und zweite Fensterscheibe (46, 66) parallel zueinander verlaufen und sich der Raumbereich zwischen der ersten und zweiten Fensterscheibe (46, 66) zweidimensional scheibenförmig parallel zur Messzellenebene E erstreckt und der Strömungskanal (92) durch den scheibenförmigen Raumbereich zwischen der ersten und zweiten Fensterscheibe (46, 66) hindurch verläuft, und wobei ein Teil des scheibenförmigen Raumbereichs zwischen der ersten und zweiten Fensterscheibe (46, 66) von dem scheibenförmigen dritten Dichtungselement (90) ausgefüllt ist.

5. Messzelle (1) nach einem der vorstehenden Ansprüche,
wobei der erste und/oder zweite Dichtungsring (48, 68) mit jeweils einer Stirnseite (48a, 68a) zumindest abschnittsweise gegen das scheibenförmige dritte Dichtungselement (90) dichtet und/oder
wobei im montierten Zustand die erste Fensterscheibe (46) flach auf nur einer ersten Flachseite (90a) des scheibenförmigen dritten Dichtungselements (90) anliegt und/oder wobei die zweite Fensterscheibe (66) flach auf nur einer der ersten Flachseite gegenüberliegenden zweiten Flachseite (90b) des scheibenförmigen dritten Dichtungselements (90) anliegt und die erste und/oder zweite Fensterscheibe (46, 66) von dem scheibenförmigen dritten Dichtungselement (90) insbesondere nicht umgriffen werden.

6. Messzelle (1) nach einem der vorstehenden Ansprüche,
wobei im montierten Zustand der erste Dichtungsring (48) an der ersten Fensterscheibe (46) lediglich an deren umlaufender Schmalseite (46c) anliegt und/oder wobei der zweite Dichtungsring (68) an der zweiten Fensterscheibe (66) lediglich an deren umlaufender Schmalseite (66c) anliegt und/oder
wobei der erste und/oder zweite Dichtungsring (48, 68) einen eckigen Querschnitt aufweisen.

7. Messzelle (1) nach einem der vorstehenden Ansprüche,
wobei der erste und/oder zweite Dichtungsring (48, 68) und/oder das scheibenförmige dritte Dichtungselement (90) eine Formgebung aufweisen, die sich durch Ausstanzen oder Ausschneiden aus einem elastomeren Plattenmaterial herstellen lässt und/oder
wobei der erste und/oder zweite Dichtungsring (48, 68) und/oder das scheibenförmige dritte Dichtungselement (90) aus elastomerem Plattenmaterial hergestellt sind und keine aus der Plattenebene hervorspringenden Formelemente aufweisen.

8. Messzelle (1) nach einem der vorstehenden Ansprüche,
wobei die erste und/oder zweite Fensterscheibe (46, 66) jeweils eine umlaufende äußere Schmalseite (46c, 66c) definieren und der erste und/oder zweite Dichtungsring (48, 68) ringförmig umlaufend um die umlaufende äußere Schmalseite (46c, 66c) der ersten bzw. zweiten Fensterscheibe (46, 66) angeordnet ist, und
wobei der Messzellengrundkörper (42) und/oder die Verschlussplatte (62) eine erste bzw. zweite Fensteröffnung (44, 64) jeweils mit einer radial umlaufenden inneren Ringwandung (44a, 64a) aufweisen, in welche die erste bzw. zweite Fensterscheibe (46, 66) mit dem ersten bzw. zweiten umlaufenden Dichtungsring (48, 68) eingesetzt ist.

9. Messzelle (1) nach Anspruch 8,
wobei der erste und/oder zweite Dichtungsring (48, 68) mit seiner radial umlaufenden Innenseite (48d, 68d) gegen die umlaufende Schmalseite (46c, 66c) der ersten bzw. zweiten Fensterscheibe (46, 66) dichtet und mit seiner radialen Außenseite (48c, 68c) gegen eine umlaufende innere Ringwandung (44a, 64a) der ersten bzw. zweiten Fensteröffnung (44, 64) dichtet, um so die erste und/oder zweite Fensterscheibe (46, 66) in den Messzellengrundkörper (42) bzw. die Verschlussplatte (62) einzusetzen und mit dem ersten bzw. zweiten Dichtungsring (48, 68) darin abzudichten,
insbesondere wobei die erste und/oder zweite Fensteröffnung (44, 64) von außen in Richtung des Probenvolumens verjüngend geformt sind, um im montierten Zustand die radiale Innenseite (48d, 68d) des ersten und/oder zweiten Dichtungsrings (48, 68) radial gegen die umlaufende Schmalseite (46c, 66c) der ersten bzw. zweiten Fensterscheibe (46, 66) zu pressen.

10. Messzelle (1) nach einem der Ansprüche 8 oder 9,
wobei die erste Messzellenbaugruppe (52) einen ersten Befestigungsring (50) umfasst, welcher an einer Außenseite (42b) des Messzellengrundkörpers (42) befestigt ist und die erste Fensterscheibe (46) in der ersten Fensteröffnung (44) hält und/oder wobei die zweite Messzellenbaugruppe (72) einen zweiten Befestigungsring (70) umfasst, welcher an einer Außenseite (62b) der Verschlussplatte (62) befestigt ist und die zweite Fensterscheibe (66) in der zweiten Fensteröffnung (64) hält.

11. Messzelle (1) nach einem der vorstehenden Ansprüche,
wobei die der Verschlussplatte (62) zugewandte Innenseite (42a) des Messzellengrundkörpers (42) zusammen mit der ersten Fensterscheibe (46) und dem die erste Fensterscheibe (46) umgebenden ersten Dichtungsring (48) zumindest abschnittsweise eine gemeinsame erste bündige Dichtfläche bilden und/oder
wobei die dem Messzellengrundkörper (42) zugewandte Innenseite (62a) der Verschlussplatte (62) zusammen mit der zweiten Fensterscheibe (66) und dem die zweite Fensterscheibe (66) umgebenden zweiten Dichtungsring (68) zumindest abschnittsweise eine gemeinsame zweite bündige Dichtfläche bilden und/oder
wobei der Messzellengrundkörper (42) und die Verschlussplatte (62) jeweils eine einander zugewandte innere Dichtfläche (42a, 62a) aufweisen, zwischen denen das scheibenförmige dritte Dichtungselement (90) eingesetzt ist und gegen welche das scheibenförmige dritte Dichtungselement (90) beidseits dichtet, wobei die innere Dichtfläche (42a) des Messzellengrundkörpers (42) einen ersten Dichtwulst (54) und/oder die innere Dichtfläche (62a) der Verschlussplatte (62) einen zweiten Dichtwulst (74) aufweist, wobei sich der erste und/oder zweite Dichtwulst (54, 74) in jeweils eine der beiden gegenüberliegenden Flachseiten (90a, 90b) des scheibenförmigen dritten Dichtungselements (90) eingräbt,
insbesondere wobei das scheibenförmige dritte Dichtungselement als Strömungsscheibe (90) ausgebildet ist und einen inneren Strömungskanal (92) definiert und der erste und/oder zweite Dichtungswulst (54, 74) parallel zur Messzellenebene E vollständig um den ersten bzw. zweiten Dichtungsring (48, 68) mit der ersten bzw. zweiten Fensterscheibe (46, 66), um den Strömungskanal (92), und um den Bereich der Mündungen (33, 35) der Zuleitung (32) und Ableitung (34) umläuft.

12. Messzelle (1) nach einem der vorstehenden Ansprüche,
wobei der Messzellengrundkörper (42) und die Verschlussplatte (62) zueinander komplementäre Gelenkteile (65a, 56b, 76) aufweisen, mittels welchen die erste und zweite Messzellenbaugruppe (52, 72) auf- und zuklappbar sind, um die Messzelle (1) zu schließen und zu öffnen,
insbesondere wobei der Messzellengrundkörper (42) an einer Schmalseite zumindest eine schlitzförmige Gelenktasche (56a, 56b) und die Verschlussplatte (62) zumindest einen Gelenkstift (76) aufweisen und der Gelenkstift (76) vom Benutzer in die schlitzförmige Gelenktasche (56a, 56b) einsetzbar ist, um bei eingesetztem Gelenkstift (76) die zweite Messzellenbaugruppe (72) mittels des so gebildeten Scharniergelenks relativ zu der ersten Messzellenbaugruppe (52) schwenken zu können und dadurch die Messzelle (1) zu Schließen und zu Öffnen.

13. Messzelle (1) nach einem der vorstehenden Ansprüche,
wobei die Messzelle (1) einen Spannmechanismus (102) aufweist, mittels welchem die erste und zweite Messzellenbaugruppe (52, 72) mit dem dazwischen liegenden scheibenförmigen dritten Dichtungselement (90) gegeneinander verspannbar sind, derart, dass das Probenvolumen (94) durch die Verspannung fluiddicht abgedichtet ist,
insbesondere wobei der Spannmechanismus (102) ein Hand-Drehrad (104) und einen Exzenterhebel (110) aufweist, welche derart ausbildet sind, dass zum Schließen der Messzelle (1) das Hand-Drehrad (104) um eine Achse senkrecht zur Messzellenebene E gedreht wird, um eine Anlage- und Spannfläche (106) des Hand-Drehrads (104) mit der zweiten Messzellenbaugruppe (72) in Überlapp zu bringen und nachfolgend die Anlage-und Spannfläche (106) das Hand-Drehrads (104) mittels des Exzenterhebels (110) gegen die zweite Messzellenbaugruppe (72) verspannt wird, und welche derart ausbildet sind, dass zum Öffnen der Messzelle (1) der Exzenterhebel (110) entspannt wird und nachfolgend das Hand-Drehrad (104) um die Achse senkrecht zur Messzellenebene E gedreht wird, bis die Anlage- und Spannfläche (106) des Hand-Drehrads (104) aus dem Überlapp mit der zweiten Messzellenbaugruppe (72) heraus gedreht ist und die zweiten Messzellenbaugruppe (72) freigibt, so dass die zweite Messzellenbaugruppe (72) von der ersten Messzellenbaugruppe (52) wegklappbar ist.

14. Messzelle (1) nach einem der vorstehenden Ansprüche,
wobei die Messzelle (1) eines, mehrere oder alle der folgenden Merkmale aufweist:
- die Zuleitung (32) und/oder die Ableitung (34) sind als Bohrungen in dem Messzellengrundkörper (42) ausgebildet,
- ein Zuleitungsrohr (22) mit einer Anschlusskupplung (26) ist umfasst, welches an die Zuleitungsbohrung anschlossen ist,
- ein Ableitungsrohr (24) mit einer Anschlusskupplung (26) ist umfasst, welches an die Ableitungsbohrung anschlossen ist,
- die Messzelle (1) ist auf einer länglichen Grundplatte (12) befestigt, wobei die Grundplatte (12) insbesondere eine Nut- oder Federführung (14) aufweist, um die Messzelle (1) mit der Grundplatte (12) in ein Partikelgrößenmessgerät einzuschieben,
- die Messzelle (1) weist einen oberen Handgriff (28) auf, um die Messzelle (1) in ein Partikelgrößenmessgerät einzuschieben,
- die Messzelle (1) weist eine sich quer zu der Grundplatte verlaufende Abschlussplatte (18) auf, welche insbesondere zumindest eine oder zwei Bohrungen (20) aufweist, durch welche sich das Zuleitungsrohr (22) und/oder das Ableitungsrohr (24) erstrecken, um von außen jeweils einen Schlauch ankuppeln zu können.

## Claims

1. Measuring cell (1) for a particle size measuring device, wherein the measuring cell (1) defines a sample volume (94) through which a dispersion can be conducted in order to generate a diffraction pattern of the disperse phase contained in the dispersion, wherein the measuring cell (1) defines a measuring cell plane (E) and comprises the following:
a supply line (32) for introducing the dispersion into the sample volume, and a discharge line (34) for discharging the dispersion from the sample volume (94),
a first measuring cell assembly (52) comprising a measuring cell main body (42), a first windowpane (46) which is arranged at the measuring cell main body (42), and a first sealing element in the form of a first sealing ring (48) for sealing the first windowpane (46) at the first measuring cell main body (42),
a second measuring cell assembly (72) comprising a closure plate (62) for fastening to the measuring cell main body (42), a second windowpane (66) which is arranged at the closure plate (62), and a second sealing element in the form of a second sealing ring (68) in order to seal the second windowpane (66) at the closure plate (62),
a plate-like third sealing element (90) consisting of elastomer material.

2. Measuring cell (1) according to claim 1,
wherein the plate-like third sealing element is configured as a flow plate (90) and defines an inner flow channel (92) and is arranged in a planar manner between the first and second measuring cell assembly (52, 72) in order to seal the first and second measuring cell assembly (52, 72) against one another, wherein the flow channel (92) extends between the supply line and the discharge line (32, 34) in the measuring cell plane (E), and forms the sample volume (94) between the first and second measuring cell assembly (52, 72).

3. Measuring cell (1) according to claim 2,
wherein the measuring cell main body (42) comprises a first inner sealing surface (42a) and the closure plate (62) comprises a second inner sealing surface (62a), wherein the first and second inner sealing surface (42a, 62a) face one another, and wherein the plate-like third sealing element (90) is inserted between the first and second inner sealing surface (42a, 62a) and provides sealing against the first and second inner sealing surface (42a, 62a),
wherein the supply line (32) and the discharge line (34) lead into a region between the first and second inner sealing surface (42a, 62a) at a first and second end (92b, 92c), respectively, of the flow channel (92), and specifically the supply line (32) on one side of the sample volume (94) and the discharge line (34) on the opposing side of the sample volume (94), and
wherein the flow channel (92) extends from the mouth (33) of the supply line (32), via the part of the sample volume (94) visible from the outside between the first and second windowpane (46, 66), to the mouth (35) of the discharge line (34),
in particular wherein positioning pins (112) protrude from the first and/or second inner sealing surface (42a, 62a), which pins engage in corresponding openings (114) in the plate-like third sealing element (90) when said sealing element lies on the first or second inner sealing surface (42a, 62a).

4. Measuring cell (1) according to any of the claims,
wherein the plate-like third sealing element is configured as a flow plate (90) and defines an inner flow channel (92),
wherein the flow channel (92) is limited by an inner narrow side (92a) and, in the mounted state, the visible part of the sample volume (94) is limited in parallel with the measuring cell plane (E) by the first and second windowpane (46, 66) and in the direction perpendicularly to the measuring cell plane (E) by the inner narrow side (92a), and/or
wherein in the mounted state the first and second windowpane (46, 66) extend in parallel with one another and the spatial region between the first and second windowpane (46, 66) extends in a two-dimensionally plate-formed manner in parallel with the measuring cell plane **E,** and the flow channel (92) extends through the plate-formed spatial region between the first and second windowpane (46, 66), and wherein a part of the plate-formed spatial region between the first and second windowpane (46, 66) is filled by the plate-like third sealing element (90).

5. Measuring cell (1) according to any of the preceding claims,
wherein the first and/or second sealing ring (48, 68) provides sealing, with one end face (48a, 68a) in each case, at least in portions against the plate-like third sealing element (90), and/or
wherein in the mounted state the first windowpane (46) lies flat on just one first flat side (90a) of the plate-like third sealing element (90) and/or wherein the second windowpane (66) lies flat on just one second flat side (90b) of the plate-like third sealing element (90) opposite the first flat side, and the first and/or second windowpane (46, 66) are in particular not encompassed by the plate-like third sealing element (90).

6. Measuring cell (1) according to any of the preceding claims,
wherein in the mounted state the first sealing ring (48) lies on the first windowpane (46) merely at its circumferential narrow side (46c), and/or wherein the second sealing ring (68) lies on the second windowpane (66) merely at its circumferential narrow side (66c), and/or
wherein the first and/or second sealing ring (48, 68) have an angular cross-section.

7. Measuring cell (1) according to any of the preceding claims,
wherein the first and/or second sealing ring (48, 68) and/or the plate-like third sealing element (90) have a shaping that can be produced by punching out or cutting out from an elastomer plate material, and/or
wherein the first and/or second sealing ring (48, 68) and/or the plate-like third sealing element (90) are produced from elastomer plate material and do not have any shaped elements projecting from the plate plane.

8. Measuring cell (1) according to any of the preceding claims,
wherein the first and/or second windowpane (46, 66) each define a circumferential outer narrow side (46c, 66c) and the first and/or second sealing ring (48, 68) is arranged in an annularly circumferential manner around the circumferential outer narrow side (46c, 66c) of the first and second windowpane (46, 66), respectively, and
wherein the measuring cell main body (42) and/or the closure plate (62) comprise a first and second window opening (44, 64), respectively, each having a radially circumferential inner annular wall (44a, 64a) into which the first and second windowpane (46, 66), respectively, with the first and second circumferential sealing ring (48, 68), respectively, is inserted.

9. Measuring cell (1) according to claim 8,
wherein the first and/or second sealing ring (48, 68) provides sealing with its radially circumferential inside (48d, 68d) against the circumferential narrow side (46c, 66c) of the first and second windowpane (46, 66), respectively, and provides sealing with its radial outside (48c, 68c) against a circumferential inner annular wall (44a, 64a) of the first and second window opening (44, 64), respectively, in order to thus insert the first and/or second windowpane (46, 66) into the measuring cell main body (42) and the closure plate (62), respectively, and provide sealing with the first and second sealing ring (48, 68), respectively, therein,
in particular wherein the first and/or second window opening (44, 64) are shaped so as to taper from the outside in the direction of the sample volume, in order to press the radial inside (48d, 68d) of the first and/or second sealing ring (48, 68) radially against the circumferential narrow side (46c, 66c) of the first and second windowpane (46, 66), respectively, in the mounted state.

10. Measuring cell (1) according to either claim 8 or claim 9,
wherein the first measuring cell assembly (52) comprises a first fastening ring (50) which is fastened to an outside (42b) of the measuring cell main body (42) and holds the first windowpane (46) in the first window opening (44), and/or wherein the second measuring cell assembly (72) comprises a second fastening ring (70) which is fastened to an outside (62b) of the closure plate (62) and holds the second windowpane (66) in the second window opening (64).

11. Measuring cell (1) according to any of the preceding claims,
wherein the inside (42a) of the measuring cell main body (42) facing the closure plate (62), together with the first windowpane (46), and the first sealing ring (48) surrounding the first windowpane (46), form a common first flush sealing surface, at least in portions, and/or
wherein the inside (62a) of the closure plate (62) facing the measuring cell main body (42), together with the second windowpane (66), and the second sealing ring (68) surrounding the second windowpane (66), form a common second flush sealing surface, at least in portions, and/or
wherein the measuring cell main body (42) and the closure plate (62) each comprise a mutually facing inner sealing surface (42a, 62a) between which the plate-like third sealing element (90) is inserted and against which the plate-like third sealing element (90) provides sealing on both sides, wherein the inner sealing surface (42a) of the measuring cell main body (42) comprises a first sealing bead (54) and/or the inner sealing surface (62a) of the closure plate (62) comprises a second sealing bead (74), wherein the first and/or second sealing bead (54, 74) digs into one of the two opposing flat sides (90a, 90b), respectively, of the plate-like third sealing element (90),
in particular wherein the plate-like third sealing element is configured as a flow plate (90) and defines an inner flow channel (92), and the first and/or second sealing bead (54, 74) extends in parallel with the measuring cell plane E, completely around the first or second sealing ring (48, 68), respectively, with the first or second windowpane (46, 66), respectively, around the flow channel (92), and around the region of the mouths (33, 35) of the supply line (32) and discharge line (34).

12. Measuring cell (1) according to any of the preceding claims,
wherein the measuring cell main body (42) and the closure plate (62) comprise mutually complementary joint parts (65a, 56b, 76), by means of which the first and second measuring cell assembly (52, 72) can be folded out and in, in order to close and open the measuring cell (1),
in particular wherein the measuring cell main body (42) comprises at least one slit-shaped joint pocket (56a, 56b) on a narrow side, and the closure plate (62) comprises at least one joint pin (76), and the joint pin (76) can be inserted by the user into the slit-shaped joint pocket (56a, 56b) in order, when the joint pin (76) is inserted, to be able to pivot the second measuring cell assembly (72) relative to the first measuring cell assembly (52) by means of the hinge joint formed in this way, and thereby to close and open the measuring cell (1).

13. Measuring cell (1) according to any of the preceding claims,
wherein the measuring cell (1) comprises a clamping mechanism (102), by means of which the first and second measuring cell assembly (52, 72) with the plate-like third sealing element (90) located therebetween can be braced against one another in such a way that the sample volume (94) is sealed in a fluid-tight manner by the bracing,
in particular wherein the clamping mechanism (102) comprises a manual rotary knob (104) and an eccentric lever (110), which are configured such that for closing the measuring cell (1) the manual rotary knob (104) is rotated about an axis perpendicular to the measuring cell plane **E,** in order to bring a contact and clamping surface (106) of the manual rotary knob (104) into overlap with the second measuring cell assembly (72) and subsequently the contact and clamping surface (106) of the manual rotary knob (104) is braced by means of the eccentric lever (110) against the second measuring cell assembly (72), and which are configured such that the eccentric lever (110) is relaxed for opening the measuring cell (1) and subsequently the manual rotary knob (104) is rotated about the axis perpendicular to the measuring cell plane E until the contact and clamping surface (106) of the manual rotary knob (104) is rotated out of the overlap with the second measuring cell assembly (72) and releases the second measuring cell assembly (72), such that the second measuring cell assembly (72) can be folded away from the first measuring cell assembly (52).

14. Measuring cell (1) according to any of the preceding claims,
wherein the measuring cell (1) comprises one, a plurality of or all of the following features:
- the supply line (32) and/or the discharge line (34) are configured as drilled holes in the measuring cell main body (42),
- a feed pipe (22) comprising a connection coupling (26) is included, which pipe is connected to the supply hole,
- a discharge pipe (24) comprising a connection coupling (26) is included, which pipe is connected to the discharge hole,
- the measuring cell (1) is fastened to an elongate base plate (12), wherein the base plate (12) in particular comprises a tongue or groove guide (14) in order to insert the measuring cell (1) with the base plate (12) into a particle size measuring device,
- the measuring cell (1) comprises an upper handle (28) in order to insert the measuring cell (1) into a particle size measuring device,
- the measuring cell (1) comprises an end plate (18) which extends transversely to the base plate and which in particular comprises at least one or two drilled holes (20) through which the feed pipe (22) and/or the discharge pipe (24) extend, in order to be able to couple a hose in each case from the outside.

## Revendications

1. Cellule de mesure (1) destinée à un appareil de mesure granulométrique, la cellule de mesure (1) définissant un volume d'échantillon (94) à travers lequel peut être guidée une dispersion aux fins de produire un motif de diffraction de la phase dispersée contenue dans la dispersion, la cellule de mesure (1) définissant un plan de cellule de mesure (E) et présentant les éléments suivants :
une conduite d'amenée (32), destinée à introduire la dispersion dans le volume d'échantillon (94), et une conduite d'évacuation (34) destinée à évacuer ensuite la dispersion du volume d'échantillon (94),
un premier module de cellule de mesure (52) comportant un corps de base de cellule de mesure (42), une première vitre (46), qui est disposée sur le corps de base de cellule de mesure (42), et un premier élément d'étanchéité sous la forme d'une première bague d'étanchéité (48) destinée à établir l'étanchéité de la première vitre (46) sur le corps de base de cellule de mesure (42),
un deuxième module de cellule de mesure (72) comportant une plaque de fermeture (62) en vue de la fixation au corps de base de cellule de mesure (42),
une deuxième vitre (66), qui est disposée sur la plaque de fermeture (62), et un deuxième élément d'étanchéité sous la forme d'une deuxième bague d'étanchéité (68) destinée à établir l'étanchéité de la deuxième vitre (66) sur la plaque de fermeture (62),
un troisième élément d'étanchéité (90) en forme de plaque, constitué d'un matériau élastomère.

2. Cellule de mesure (1) selon la revendication 1,
dans laquelle le troisième élément d'étanchéité en forme de plaque est réalisé sous forme de plaque d'écoulement (90) et définit un conduit d'écoulement (92) intérieur et est disposé à plat entre le premier et le deuxième module de cellule de mesure (52, 72) pour rendre le premier et le deuxième module de cellule de mesure (52, 72) étanches l'un vis-à-vis de l'autre, le conduit d'écoulement (92) s'étendant entre la conduite d'amenée et la conduite d'évacuation (32, 34) dans le plan de cellule de mesure (E) et forme le volume d'échantillon (94) entre le premier et le deuxième module de cellule de mesure (52, 72).

3. Cellule de mesure (1) selon la revendication 2,
dans laquelle le corps de base de cellule de mesure (42) présente une première surface d'étanchéité (42a) intérieure et la plaque de fermeture (62) présente une deuxième surface d'étanchéité (62a) intérieure, la première et la deuxième surface d'étanchéité (42a, 62a) intérieures étant tournées l'une vers l'autre, et le troisième élément d'étanchéité (90) en forme de plaque étant inséré entre la première et la deuxième surface d'étanchéité (42a, 62a) intérieures et établissant l'étanchéité vis-à-vis de la première et de la deuxième surface d'étanchéité (42a, 62a) intérieure,
dans laquelle la conduite d'amenée (32) et la conduite d'évacuation (34) débouchent dans une zone entre la première et la deuxième surface d'étanchéité (42a, 62a) intérieures, à une première et une deuxième extrémité (92b, 92c) du conduit d'écoulement (92), à savoir la conduite d'amenée (32) sur un côté du volume d'échantillon (94) et la conduite d'évacuation (34) sur le côté opposé du volume d'échantillon (94), et
dans laquelle le conduit d'écoulement (92) s'étend de l'embouchure (33) de la conduite d'amenée (32) à l'embouchure (35) de la conduite d'évacuation (34), en passant par la partie du volume d'échantillon (94) qui est visible de l'extérieur entre la première et la deuxième vitre (46, 66),
notamment dans laquelle des doigts de positionnement (112) font saillie à partir de la première et/ou de la deuxième surface d'étanchéité (42a, 62a) intérieures et s'engagent dans des ouvertures (114) correspondantes dans le troisième élément d'étanchéité (90) en forme de plaque, lorsque celui-ci est appliqué contre la première ou la deuxième surface d'étanchéité (42a, 62a) intérieures.

4. Cellule de mesure (1) selon une des revendications,
dans laquelle le troisième élément d'étanchéité (90) en forme de plaque est réalisé comme plaque d'écoulement (90) et définit un conduit d'écoulement (92) intérieur,
dans laquelle le conduit d'écoulement (92) est délimité par une tranche (92a) intérieure et, à l'état assemblé, la partie visible du volume d'échantillon (94) est délimitée par la première et la deuxième vitre (46, 66), parallèlement au plan de cellule de mesure (E), et est délimitée par la tranche (92a) intérieure, dans la direction perpendiculaire au plan de cellule de mesure (E), et/ou
dans laquelle, à l'état assemblé, la première et la deuxième vitre (46, 66) sont parallèles l'une à l'autre, et la zone d'espace entre la première et la deuxième vitre (46, 66) s'étend en forme de plaque à deux dimensions, parallèlement au plan de cellule de mesure E, et le conduit d'écoulement (92) s'étend à travers la zone d'espace en forme de plaque entre la première et la deuxième vitre (46, 66), et dans laquelle une partie de la zone d'espace en forme de plaque entre la première et la deuxième vitre (46, 66) est remplie par le troisième élément d'étanchéité (90) en forme de plaque.

5. Cellule de mesure (1) selon une des revendications précédentes,
dans laquelle la première et/ou la deuxième bague d'étanchéité (48, 68) établit l'étanchéité, au moins par portions, respectivement avec une face frontale (48a, 68a) contre le troisième élément d'étanchéité (90) en forme de plaque, et/ou dans laquelle, à l'état assemblé, la première vitre (46) est appliquée à plat seulement sur un premier côté plat (90a) du troisième élément d'étanchéité (90) en forme de plaque, et/ou dans laquelle la deuxième vitre (66) est appliquée à plat seulement sur un deuxième côté plat (90b) du troisième élément d'étanchéité (90) en forme de plaque, opposé au premier côté plat, et la première et/ou la deuxième vitre (46, 66) ne sont en particulier pas entourées par le troisième élément d'étanchéité (90) en forme de plaque.

6. Cellule de mesure (1) selon une des revendications précédentes,
dans laquelle, à l'état assemblé, la première bague d'étanchéité (48) est en appui contre la première vitre (46) seulement sur la tranche (46c) périphérique de celle-ci, et/ou dans laquelle la deuxième bague d'étanchéité (68) est appliquée contre la deuxième vitre (66) seulement sur la tranche (66c) périphérique de celle-ci, et/ou
dans laquelle la première et/ou la deuxième bague d'étanchéité (48, 68) présentent une section angulaire.

7. Cellule de mesure (1) selon une des revendications précédentes,
dans laquelle la première et/ou la deuxième bague d'étanchéité (48, 68) et/ou le troisième élément d'étanchéité (90) en forme de plaque présentent une conformation qui peut être réalisée par poinçonnage ou découpage dans un matériau de plaque élastomère, et/ou
dans lequel la première et/ou la deuxième bague d'étanchéité (48, 68) et/ou le troisième élément d'étanchéité (90) sont réalisés à partir d'un matériau de plaque élastomère et ne présentent pas d'éléments façonnés faisant saillie à partir du plan de la plaque.

8. Cellule de mesure (1) selon une des revendications précédentes,
dans laquelle la première et la deuxième vitre (46, 66) définissent chacune une tranche (46c, 66c) extérieure périphérique, et la première et/ou la deuxième bague d'étanchéité (48, 68) sont disposées autour de la tranche (46c, 66c) extérieure périphérique de la première ou de la deuxième vitre (46, 66), en l'entourant sous une forme annulaire, et
dans laquelle le corps de base de cellule de mesure (42) et/ou la plaque de fermeture (62) présentent respectivement une première et une deuxième ouverture de fenêtre (44, 64), dotées respectivement d'une paroi annulaire (44a, 64a) intérieure périphérique, dans laquelle la première ou la deuxième vitre (46, 66) sont insérées respectivement avec la première ou la deuxième bague d'étanchéité (48, 68).

9. Cellule de mesure (1) selon la revendication 8,
dans laquelle la première et/ou la deuxième bague d'étanchéité (48, 68) établit avec sa face intérieure (48d, 68d) radialement périphérique l'étanchéité vis-à-vis de la tranche (46c, 66c) périphérique, respectivement de la première et de la deuxième vitre (46, 66), et établit avec sa face extérieure (48c, 68c) radiale l'étanchéité vis-à-vis d'une paroi annulaire (44a, 64a) périphérique intérieure, respectivement de la première et de la deuxième vitre (46, 66), pour monter ainsi la première et/ou la deuxième vitre (46, 66) dans le corps de base de cellule de mesure (42) ou la plaque de fermeture (62) et y établir leur étanchéité avec la première et/ou la deuxième bague d'étanchéité (48, 68),
notamment dans laquelle la première et/ou la deuxième ouverture de fenêtre (44, 64) sont formées de manière à se rétrécir de l'extérieur en direction du volume d'échantillon, afin de presser, à l'état assemblé, la face intérieure (48d, 68d) radiale de la première et/ou de la deuxième bague d'étanchéité (48, 68) radialement contre la tranche (46c, 66c) périphérique respectivement de la première et de la deuxième vitre (46, 66).

10. Cellule de mesure (1) selon une des revendications 8 ou 9,
dans laquelle le premier module de cellule de mesure (52) comprend une première bague de fixation (50) qui est fixée à une face extérieure (42b) du corps de base de cellule de mesure (42) et maintient la première vitre (46) dans la première ouverture de fenêtre (44), et/ou dans laquelle le deuxième module de cellule de mesure (72) comprend une deuxième bague de fixation (70) qui est fixée à une face extérieure (62b) de la plaque de fermeture (62) et maintient la deuxième vitre (66) dans la deuxième ouverture de fenêtre (64).

11. Cellule de mesure (1) selon une des revendications précédentes,
dans laquelle la face intérieure (42a) du corps de base de cellule de mesure (42) qui est tournée vers la plaque de fermeture (62) forme, conjointement avec la première vitre (46) et la première bague d'étanchéité (48) entourant la première vitre (46), au moins par portions une première surface d'étanchéité affleurante commune, et/ou
dans laquelle la face intérieure (62a) de la plaque de fermeture (62) qui est tournée vers le corps de base de cellule de mesure (42) forme, conjointement avec la deuxième vitre (66) et la deuxième bague d'étanchéité (68) entourant la deuxième vitre (66), au moins par portions une deuxième surface d'étanchéité affleurante commune, et/ou
dans laquelle le corps de base de cellule de mesure (42) et la plaque de fermeture (62) présentent respectivement une surface d'étanchéité (42a, 62a) intérieure, qui sont tournées l'une vers l'autre et entre lesquelles est inséré le troisième élément d'étanchéité (90) en forme de plaque et contre lesquelles le troisième élément d'étanchéité (90) en forme de plaque établit l'étanchéité sur les deux faces, la surface d'étanchéité (42a) intérieure du corps de base de cellule de mesure (42) présentant un premier bourrelet d'étanchéité (54) et/ou la surface d'étanchéité (62a) intérieure de la plaque de fermeture (62) présentant un deuxième bourrelet d'étanchéité (74), le premier et/ou le deuxième bourrelet d'étanchéité (54, 74) s'enfonçant respectivement dans l'un des deux côtés plats (90a, 90b), situés en vis-à-vis, du troisième élément d'étanchéité (90) en forme de plaque,
notamment dans laquelle le troisième élément d'étanchéité en forme de plaque est réalisé sous forme de plaque d'écoulement (90) et définit un conduit d'écoulement (92) intérieur, et le premier et/ou le deuxième bourrelet d'étanchéité (54, 74) s'étend, parallèlement au plan de cellule de mesure E, chaque fois complètement autour de la première et de la deuxième bague d'étanchéité (48, 68) avec la première et la deuxième vitre (46, 66), autour du conduit d'écoulement (92) et autour de la région des embouchures (33, 35) de la conduite d'amenée (32) et de la conduite d'évacuation (34).

12. Cellule de mesure (1) selon une des revendications précédentes,
dans laquelle le corps de base de cellule de mesure (42) et la plaque de fermeture (62) présentent des éléments articulés (65a, 56b, 76) mutuellement complémentaires, à l'aide desquels le premier et le deuxième module de cellule de mesure (52, 72) peuvent être déployés et rabattus pour fermer et ouvrir la cellule de mesure (1),
notamment dans laquelle le corps de base de cellule de mesure (42) présente sur une tranche au moins un logement d'articulation (56a, 56b) en forme de fente, et la plaque de fermeture (62) présente au moins une tige d'articulation (76), et la tige d'articulation (76) peut être insérée par l'utilisateur dans le logement d'articulation (56a, 56b) en forme de fente, afin de pouvoir faire pivoter le deuxième module de cellule de mesure (72), à l'aide de l'articulation à charnière ainsi formée, par rapport au premier module de cellule de mesure (52), lorsque la tige d'articulation (76) est insérée, et pour fermer et ouvrir de ce fait la cellule de mesure (1).

13. Cellule de mesure (1) selon une des revendications précédentes,
dans laquelle la cellule de mesure (1) présente un mécanisme de serrage (102) à l'aide duquel le premier et le deuxième module de cellule de mesure (52, 72) peuvent être serrés l'un contre l'autre, alors que le troisième élément d'étanchéité (90) en forme de plaque est disposé entre eux, de telle sorte que le volume d'échantillon (94) est rendu étanche aux fluides par le serrage, notamment dans laquelle le mécanisme de serrage (102) présente une manette rotative (104) et un levier à excentrique (110) qui sont réalisés de manière à ce que, pour la fermeture de la cellule de mesure (1), la manette rotative (104) soit tournée autour d'un axe perpendiculaire au plan de cellule de mesure E, aux fins d'amener une surface d'appui et de serrage (106) de la manette rotative (104) à se chevaucher avec le deuxième module de cellule de mesure (72) et pour qu'ensuite la surface d'appui et de serrage (106) de la manette rotative (104) soit serrée contre le deuxième module de cellule de mesure (72) au moyen du levier à excentrique (110), et qui sont réalisés de manière à ce que, pour l'ouverture de la cellule de mesure (1), le levier à excentrique (110) soit desserré et qu'ensuite la manette rotative (104) soit tournée autour de l'axe perpendiculaire au plan de cellule de mesure E, jusqu'à ce que la surface d'appui et de serrage (106) de la manette rotative (104) ait tourné pour quitter le chevauchement avec le deuxième module de cellule de mesure (72) et libère le deuxième module de cellule de mesure (72), de sorte que le deuxième module de cellule de mesure (72) peut être basculé pour s'éloigner du premier module de cellule de mesure (52).

14. Cellule de mesure (1) selon une des revendications précédentes,
dans laquelle la cellule de mesure (1) présente une, plusieurs ou l'ensemble des caractéristiques suivantes :
- la conduite d'amenée (32) et/ou la conduite d'évacuation (34) sont réalisées sous forme de trous dans le corps de base de cellule de mesure (42),
- un tube d'amenée (22) doté d'un couplage de raccordement (26) est inclus et est raccordé au trou de la conduite d'amenée,
- un tube d'évacuation (24) doté d'un couplage de raccordement (26) est inclus et est raccordé au trou de la conduite d'évacuation,
- la cellule de mesure (1) est fixée à une plaque de base (12) allongée, la plaque de base (12) présentant notamment un guide à rainure ou languette (14) pour glisser la cellule de mesure (1) avec la plaque de base (12) dans un appareil de mesure granulométrique,
- la cellule de mesure (1) présente une poignée (28) supérieure pour glisser la cellule de mesure (1) dans un appareil de mesure granulométrique,
- la cellule de mesure (1) présente une plaque d'extrémité (18) qui s'étend perpendiculairement à la plaque de base et présente notamment au moins un ou deux trous (20) à travers lesquels s'étendent la conduite d'amenée (22) et/ou la conduite d'évacuation (24), afin de pouvoir accoupler respectivement un tuyau de l'extérieur.
